# EUROPÄISCHE PATENTSCHRIFT

(11) **EP 3 021 729 B1**
(45) Veröffentlichungstag und Bekanntmachung des Hinweises auf die Patenterteilung: **04.12.2019**
(21) Anmeldenummer: 14738501.7
(22) Anmeldetag: 10.07.2014
(51) Int. Cl.: A47L 15/00, A47L 15/42

(54) **GESCHIRRSPÜLMASCHINE MIT EINEM IN EINEM WASSERBEHÄLTER INTEGRIERTEN ABFLUSSROHRLEITUNGSABSCHNITT**
DISHWASHER HAVING A DRAINAGE PIPE SECTION INTEGRATED IN A WATER TANK
LAVE-VAISSELLE COMPRENANT UNE SECTION DE CONDUITE TUBULAIRE D'ÉVACUATION INTÉGRÉE DANS UN RÉCIPIENT D'EAU

(30) Priorität: 17.07.2013 DE 102013213970
(43) Veröffentlichungstag der Anmeldung: 25.05.2016
(73) Patentinhaber: BSH Hausgeräte GmbH, 81739 München (DE)
(72) Erfinder: FAUTH, Michael, 91785 Pleinfeld (DE); REITER, Andreas, 89435 Finningen (DE); RIEDINGER, Jochen, 89407 Dillingen (DE); RIEGER, Roland, 73492 Rainau (DE)
(86) Internationale Anmeldenummer: PCT/EP2014/064836
(87) Internationale Veröffentlichungsnummer: WO 2015/007610

(56) Entgegenhaltungen:
- EP-A1- 2 543 305
- EP-A2- 2 108 299
- DE-A1- 3 901 169

## Beschreibung

Die Erfindung betrifft eine Geschirrspülmaschine, insbesondere Haushaltsgeschirrspülmaschine, mit einer Steuereinrichtung zur Steuerung eines Spülgangs zum Reinigen von Spülgut anhand wenigstens eines in der Steuereinrichtung hinterlegten Spülprogramms, mit einem Spülbehälter zur Aufnahme des Spülguts, mit einem Wasserbehälter zum Bevorraten von Wasser, insbesondere von Frischwasser, und mit einer durch die Steuereinrichtung steuerbaren Laugenpumpe zum Abpumpen von Abwasser aus dem Spülbehälter über eine Abflussrohrleitung, die durch den Wasserbehälter hindurchgeführt ist.

Bei einer derartigen Geschirrspülmaschine ist vorgesehen, dass das im Wasserbehälter bevorratete Wasser dem erwärmten Abwasser Wärme entzieht, so dass weniger Energie für die Erwärmung des bevorrateten Wassers auf eine gewünschte Temperatur erforderlich ist. In der Praxis kann jedoch bei einer derartigen Geschirrspülmaschine der Grad der Wärmeübertragung zwischen dem durch die Abflussrohrleitung aus dem Spülbehälter abgepumpten Abwasser und dem im Wasserbehälter bevorrateten Wasser oftmals zu gering sein. Angesichts steigender Energiepreise besteht ein anhaltender Bedarf für eine weitere energetische Optimierung derartiger Geschirrspülmaschinen.

In der DE 39 01 169 A1 wird ein Verfahren zur Rückgewinnung von Wärmeenergie aus Arbeitsflüssigkeit einer programmgesteuerten Haushalts-Geschirrspül- oder Waschmaschine beschrieben, wobei die Arbeitsflüssigkeit in einem Arbeitsprogrammabschnitt aufgeheizt wird und in Wärmeaustausch mit bevorratetem Frischwasser gebracht wird, das in einem nachfolgenden Arbeitsprogrammabschnitt in den Arbeitsbehälter abgelassen wird. Erfindungsgemäß ist vorgesehen, dass die erwärmte Arbeitsflüssigkeit erst nach Beendigung des Arbeitsprogrammabschnitts, in dem sie aufgeheizt worden ist, in Wärmeaustausch mit dem Frischwasser gebracht wird

Ferner offenbart die EP 2 543 305 A1 eine Geschirrspülmaschine mit einem Frischwasserbehälter, welcher mit Frischwasser befüllbar ist, und einer Abflussrohrleitung zur Abführung von Abwasser aus einem Spülbehälter der Geschirrspülmaschine, wobei die Abflussrohrleitung als Wellenrohrleitung ausgebildet ist und durch den Frischwasserbehälter hindurch geführt ist.

Aufgabe der Erfindung ist es, eine Geschirrspülmaschine zu schaffen, bei welcher die zur Erwärmung des Spülwassers notwendige Energiemenge gesenkt werden kann.

Die Aufgabe wird bei einer Geschirrspülmaschine der eingangs genannten Art dadurch gelöst, dass das Spülprogramm so ausgebildet ist, dass das Abwasser wenigstens einmal mittels einer Abpumpsequenz abgepumpt ist, welche wenigstens eine Teilabpumpsequenz umfasst, die jeweils einen Abpumpschritt zum Abpumpen einer Teilvolumens des Abwassers und einen darauffolgenden Abpumppausenschritt zum Übertragen von Wärmeenergie von dem Teilvolumen des Abwassers auf das bevorratete Wasser, insbesondere Frischwasser, aufweist.

Bei modernen Geschirrspülmaschinen wird das Spülgut, insbesondere zu spülendes Geschirr, in einen Spülbehälter eingebracht und dort in einem Spülprozess, der auch Spülgang genannt wird, unter Zuhilfenahme von Wasser gereinigt und anschließend getrocknet. Ziel ist es dabei, einen Spülgang so durchzuführen, dass ein vordefiniertes Reinigungsergebnis und ein vordefiniertes Trocknungsergebnis möglichst effizient erreicht werden. Gefordert ist dabei eine hohe Gesamteffizienz, welche sich insbesondere aus der Reinigungseffizienz und der Trocknungseffizienz ergibt. Die Reinigungseffizienz entspricht dabei dem Verhältnis des mittels eines Spülgangs erzielten Reinigungsergebnisses und dem hierzu erforderlichen Aufwand, wobei der Aufwand mehrere Dimensionen, beispielsweise den Energiebedarf, den Wasserbedarf und/oder den Zeitbedarf, umfassen kann. Weiterhin entspricht die Trocknungseffizienz dem Verhältnis des mittels eines Spülgangs erzielten Trocknungsergebnisses und dem hierzu erforderlichen Aufwand, wobei der Aufwand auch hier mehrere Dimensionen, beispielsweise den Energiebedarf und/oder den Zeitbedarf, umfassen kann.

Bei modernen Geschirrspülmaschinen ist in aller Regel eine Steuereinrichtung vorgesehen, bei der ein oder mehrere Spülprogramme zur Steuerung eines Spülgangs zum Reinigen von Spülgut hinterlegt sind. Die Steuereinrichtung kann insbesondere als Ablaufsteuereinrichtung ausgebildet sein und steuernd, und/oder ggf. auch regelnd, d.h. verallgemeinert ausgedrückt kontrollierend auf den Spülprozess einwirken. Die Ablaufsteuereinrichtung ist dabei so ausgebildet, dass sie einen Spülgang nach einem, üblicherweise durch einen Bediener ausgewählten, Spülprogramm automatisch kontrolliert bzw. reguliert und durchführt.

Ein Spülprogramm weist insbesondere mehrere aufeinanderfolgende Programmschritte zur Behandlung des Spülguts auf. Dabei kann das Wasser in den wasserführenden Programmschritten jeweils in Abhängigkeit von dem jeweiligen Programmschritt bei Bedarf zweckmäßigerweise mit Reinigungs- und/oder Zusatzstoffen versehen und/oder auf eine für den jeweiligen Programmschritt günstige Temperatur gebracht werden. Um das zum Spülen vorgesehene Wasser mit den vorgesehenen Reinigungs- und/oder Zusatzstoffen versehen zu können, können moderne Geschirrspülmaschinen vorzugsweise, insbesondere automatische, Dosiereinrichtungen aufweisen.

Weiterhin können Geschirrspülmaschinen eine (oder mehrere), üblicherweise elektrische, Heizeinrichtung(en) aufweisen, um das zum Spülen vorgesehene Wasser auf die erforderlichen Temperaturen zu bringen. Als Heizeinrichtung kann im Flüssigkeitssystem der Geschirrspülmaschine vorzugsweise ein Durchlauferhitzer vorgesehen sein. Zweckmäßigerweise kann dieser mit der Umwälzpumpe der Geschirrspülmaschine zu einer Baueinheit zusammengefasst sein. Insbesondere kann die Heizeinrichtung in das Gehäuse der Umwälzpumpe integriert sein, so dass eine kompakte "Heizpumpe" bereitgestellt ist. Zusätzlich oder unabhängig hiervon kann als Heizeinrichtung ggf. eine Luftheizung vorgesehen sein. Diese kann zweckmäßigerweise in einen Luftkanal eingefügt sein, dessen eingangsseitiges Ende an eine Ausgangsöffnung des Spülbehälters sowie dessen ausgangsseitiges Ende an eine Eingangsöffnung des Spülbehälters angeschlossen ist. Somit ist der Luftkanal mit dem Innenraum des Spülbehälters verbunden und bildet zusammen mit diesem einen Luftumwälzkreislauf. In diesen kann insbesondere ein Lüfter eingefügt sein. Ggf. kann der Luftkanal mindestens eine Verbindung zur Außen- bzw. Umgebungsluft z.B. über eine Abzweigleitung oder Ventilvorrichtung haben, um Außenluft der Luft aus dem Spülbehälter zumischen oder Luft aus dem Spülbehälter in die Umgebung ableiten zu können. Auf diese Weise kann von der Luftheizung erwärmte Luft ihre Wärmeenergie an die Flüssigkeit im Spülbehälter direkt oder indirekt transferieren. Zusätzlich oder unabhängig hiervon kann ein solcher Luftkanal mit Luftheizung in analoger Weise mit einer sonstigen Komponente wie z.B. der Umwälzpumpe des Flüssigkeitssystems der Geschirrspülmaschine thermisch gekoppelt sein, so dass von der erwärmten Luft Wärmeenergie auf die Flüssigkeit übertragen werden kann. In den Luftkanal kann vorteilhafterweise eine sogenannte Sorptionskolonne mit reversibel dehydrierbarem Sorptionstrocknungsmaterial wie z.B. Zeolith eingebaut sein. Dieses dient der Adsorption von Feuchtigkeit aus der Luft des Spülbehälters während des Trocknungsgangs des Spülgangs, der vom jeweilig gewählten Spülprogramm durchgeführt wird. Insbesondere bilden der Luftkanal, die Luftheizung, die Sorptionskolonne, sowie der Lüfter bzw. das Gebläse Bestandteile eines Sorptionstrocknungssystems.

Ein typisches Spülprogramm umfasst zur Reinigung des Spülguts in dieser Reihenfolge vorzugsweise einen Vorspülschritt, einen Reinigungsschritt, einen Zwischenspülschritt und einen Klarspülschritt, bei denen das Spülgut jeweils mit Wasser beaufschlagt wird. Derartige Programmschritte werden wasserführende Programmschritte genannt. Es können jedoch auch Spülprogramme vorgesehen sein, bei denen ein oder mehrere dieser Programmschritte ausgeblendet sind. Auch sind Spülprogramme möglich, bei denen ein oder mehrere dieser Programmschritte mehrfach durchlaufen werden. Weiterhin umfasst ein typisches Spülprogramm einen sich daran anschließenden, spülprogrammabschließenden Trocknungsschritt zum Trocknen des gereinigten Spülguts.

Ein Vorspülschritt dient dabei vor allem der Entfernung von gröberen Verschmutzungen vom Spülgut. Der Zweck eines nachfolgenden Reinigungsschritts besteht darin, Verschmutzungen vollständig von dem Spülgut zu entfernen. Ein nach dem Reinigungsschritt durchgeführter Zwischenspülschritt dient insbesondere der Entfernung von Reinigungsmittelresten, welche am Spülgut anhaften, vorzugsweise mittels sauberem Frischwasser. Ein darauffolgender Klarspülschritt ist insbesondere zur Vermeidung von Flecken auf dem Spülgut, welche durch gelöste Stoffe im Wasser, wie beispielsweise Salz und/oder Kalk, entstehen könnten, vorgesehen. Hierzu wird das Wasser während des Klarspülschritts mit Klarspüler versetzt.

Bei einer Geschirrspülmaschine mit einer sogenannten Eigenwärmetrocknung besteht eine weitere Aufgabe des Klarspülschritts darin, den nachfolgenden Trocknungsschritt vorzubereiten. Dabei wird das Spülgut während des Klarspülschritts auf eine hohe Temperatur aufgeheizt. Im abschließenden Trocknungsschritt verdunsten am heißen Spülgut anhaftende Wassertropfen und schlagen sich an der Innenseite des Spülbehälters aufgrund der dort (im Vergleich zur Temperatur des Spülguts) herrschenden niedrigeren Temperatur ab. Zusätzlich oder unabhängig hiervon kann der Trocknungsschritt ggf. mit einer Sorptionstrockeneinrichtung durchgeführt werden.

Um den Wasserbedarf zur Durchführung eines Spülgangs zu decken, weisen Geschirrspülmaschinen vorzugsweise jeweils eine Frischwasserzulaufeinrichtung zum Aufnehmen von Frischwasser auf. Eine derartige Frischwasserzulaufeinrichtung ist dazu vorgesehen, insbesondere an eine externe Frischwasserversorgung angeschlossen zu werden, welche unter Druck stehendes Frischwasser bereitstellt. Dabei kann es sich beispielsweise um eine gebäudeseitig installierte Wasserleitung handeln.

Ferner umfasst die erfindungsgemäße Geschirrspülmaschine insbesondere einen Wasserbehälter als Wasserspeicher, der es erlaubt, Wasser zur späteren Verwendung zu bevorraten. Bei dem bevorrateten Wasser kann es sich insbesondere um Frischwasser handeln. Die Temperatur einer haushaltsüblichen Frischwasserversorgung liegt in aller Regel unter einer Umgebungstemperatur, in der eine Geschirrspülmaschine betrieben wird. Dabei ist es möglich, das für einen Spülgang benötigte Frischwasser aus der Frischwasserversorgung in den Wasserbehälter einzuleiten und es dort für eine bestimmte Verweilzeitdauer zu speichern, bevor es für die Durchführung des Spülgangs wieder aus dem Wasserbehälter entnommen wird. In dieser Verweilzeit- bzw. Aufenthaltszeitdauer, während der sich das Frischwasser im Wasserbehälter befindet, kann sich das Frischwasser erwärmen, so dass für den Spülgang vorgewärmtes Frischwasser zur Verfügung steht. Im Idealfall weist das vorgewärmte Frischwasser eine Temperatur auf, welche der Umgebungs- oder Raumtemperatur am Aufstellort der Geschirrspülmaschine entspricht. Diese kann beispielsweise 8° C bis10° C über der Temperatur der Frischwasserversorgung liegen.

Zusätzlich oder unabhängig hiervon ist es aber auch möglich, in dem Wasserbehälter Wasser zu bevorraten, welches bereits während eines Programmschritts zum Beaufschlagen von Spülgut verwendet wurde, um es in einem späteren Programmschritt desselben oder eines späteren Spülgangs erneut zum Beaufschlagen von Spülgut zu verwenden. Der Wasserbehälter fungiert in diesem Fall also als sogenannter Spülflottenspeicher. Auf diese Weise kann der Frischwasserbedarf sowie der Energiebedarf zum Beheizen von Wasser gesenkt werden.

Weiterhin umfasst die erfindungsgemäße Geschirrspülmaschine eine Laugenpumpe, auch Abwasserpumpe genannt, welche es ermöglicht, Abwasser, also Wasser, das nicht zur weiteren Verwendung vorgesehen ist, über eine Abflussrohrleitung aus dem Spülbehälter abzupumpen. Dabei ist vorgesehen, die Abwasserrohrleitung mit einer externen, insbesondere gebäudeseitig installierten Abwasserentsorgungseinrichtung zu verbinden, um so das Abwasser zu entsorgen.

Weiterhin ist die Abflussrohrleitung durch den Wasserbehälter hindurchgeführt. Sofern nun das durch die Abflussrohrleitung abgeführte Abwasser wärmer als das im Wasserbehälter etwaig bevorratete Wasser ist, so entzieht das im Wasserbehälter für eine spätere Verwendung bevorratete Wasser dem abgepumpten Abwasser Wärmeenergie und erwärmt sich auf eine gegenüber seiner ursprünglichen Einlasswassertemperatur höhere Speichertemperatur, so dass grundsätzlich weniger zusätzliche Heizenergie dafür aufgebracht werden muss, das aus dem Wasserbehälter in den Spülbehälter oder verallgemeinert ausgedrückt in das Flüssigkeitssystem der Geschirrspülmaschine mit der Speichertemperatur eingelassene Wasser für seine Verwendung im Spülbehälter oder verallgemeinert ausgedrückt Flüssigkeitssystem auf eine gewünschte Endtemperatur zu bringen. Die Endtemperatur liegt dabei vorzugsweise höher als die Speichertemperatur. Wenn für das in den Spülbehälter und/oder in das Flüssigkeitssystem aus dem Wasserbehälter eingelassene Wasser bereits die Speichertemperatur als Endtemperatur genügt, kann eine zusätzliche Aufheizung des Wassers mittels Heizmittel ganz entfallen, d.h. es reicht dann bereits allein der Wärmeenergietransfer vom abgepumpten Abwasser auf das im Wasserbehälter zwischengespeicherte Wasser, um dessen Temperatur auf eine gewünschte Endtemperatur für seine nachfolgende Verwendung im Spülbehälter oder verallgemeinert ausgedrückt Flüssigkeitssystem zu bringen.

Erfindungsgemäß ist es nun vorgesehen, dass das Spülprogramm so ausgebildet ist, dass das Abwasser wenigstens einmal mittels einer Abpumpsequenz abgepumpt ist, welche wenigstens eine Teilabpumpsequenz umfasst, die jeweils einen Abpumpschritt zum Abpumpen eines Teilvolumens des Abwassers und einen darauffolgenden Abpumppausenschritt zum Übertragen von Wärmeenergie von dem Teilvolumen des Abwassers auf das bevorratete Wasser aufweist. Unter einer Abpumpsequenz wird dabei ein Teil eines Spülgangs verstanden, bei dem Abwasser mittels der Laugenpumpe gesteuert und/oder geregelt, d.h. verallgemeinert ausgedrückt kontrolliert durch die Steuereinrichtung anhand des Spülprogramms abgepumpt wird. Eine Teilabpumpsequenz ist also ein Teilabschnitt der Abpumpsequenz und umfasst einen Abpumpschritt, bei dem ein Teilvolumen des abzupumpenden Abwassers mittels der Laugenpumpe aus dem Spülbehälter abgepumpt wird, und einen darauffolgenden Abpumppausenschritt, bei dem das Abpumpen, insbesondere durch Ausschalten oder Stillstand der Laugenpumpe, unterbrochen ist, um so Wärmeenergie von dem in der Abflussrohrleitung stehenden Teilvolumen des abzupumpenden Abwassers auf das im Wasserbehälter jeweilig bevorratete Wasser zu übertragen. Ggf. kann es anstelle eines Ausschaltens der Laugenpumpe genügen, die Drehzahl der Laugenpumpe während des jeweiligen Abpumppausenschritts gegenüber ihrer Drehzahl während des vorausgehenden Abpumpschritts soweit abzusenken oder zu reduzieren, dass aus dem im Wasserbehälter angeordneten Abschnitt der Abflussrohrleitung (im Vergleich zum vorausgehenden Abpumpschritt) weniger Abwasser oder kaum Abwasser heraus in eine Abwasserentsorgungseinrichtung wie z.B. einem hausseitigen Abwasserrohr gefördert wird, d.h. ein überwiegender Teil der Abwassermenge bleibt im im Wasserbehälter angeordneten Abflussrohrleitungsabschnitt für eine vorgegebene Verweilzeitdauer stehen. Unter einem Abpumppausenschritt wird somit verallgemeinert betrachtet im Rahmen der Erfindung ein solcher Verweilzustand für das Abwasser während einer Teilabpumpsequenz verstanden, während dem das Abwasser nach der Durchführung eines zeitlich vorausgehenden Abpumpschritts im Abflussrohrleitungsabschnitt, der durch den Wasserbehälter hinduchgeführt ist, zum überwiegenden Teil verbleibt oder ganz stehen bleibt.

Einer Teilabpumpsequenz (zusammengesetzt aus Abpumpschritt und nachfolgendem Abpumppausenschritt) kann sich eine weitere Teilabpumpsequenz (ebenfalls zusammengesetzt aus Abpumpschritt und nachfolgendem Abpumppausenschritt) anschließen, und somit ein Wechsel von Abpumpschritten mit zwischen diesen liegenden Abpumppausenschritten solange fortsetzen, bis das abzupumpende Abwasser bis zu einem gewünschten Restpegelstand oder vollständig abgepumpt ist. Insbesondere kann das letzte Teilvolumen des Abwassers, das am Ende einer Abpumpsequenz aus dem Spülbehälter abgepumpt wird, aber auch in einer Endabpumpsequenz abgepumpt werden, welche keinen Abpumppausenschritt mehr vorsieht.

Die Übertragung von Wärme erfolgt damit bei der erfindungsgemäßen Geschirrspülmaschine nicht nur während der Zeit des jeweiligen Abpumpbetriebs der Laugenpumpe, bei dem diese das Abwasser aus dem Spülbehälter durch den im Wasserbehälter verlegten Abflussrohrleitungsabschnitt hindurch abpumpt, sondern auch oder insbesondere vor allem auch in den Abpumppausen.

Auf diese Weise kann dem Abwasser wesentlich mehr Wärmeenergie entzogen werden, als dies bei einem kontinuierlichen, zeitlich durchgehenden, d.h. ununterbrochenen Abpumpen des Gesamtvolumens des Abwassers möglich wäre. Insbesondere durch fortgesetzten Wechsel von Abpumpschritten und Abpumppausenschritten kann gegenüber dem kontinuierlichen Abpumpen das im Wasserbehälter bzw. Vorratsspeicher bevorratete Wasser beim Abpumpen auf eine deutlich höhere Temperatur gebracht werden, so dass der Energiebedarf zum Beheizen des bevorrateten Wassers auf eine jeweilig gewünschte Endtemperatur deutlich sinken kann.

Gemäß einer bevorzugten Weiterbildung der Erfindung ist das Spülprogramm so ausgebildet, dass das Teilvolumen des Abwassers, welches während einer der Teilabpumpsequenzen abgepumpt ist, wenigstens 70 %, bevorzugt wenigstens 80 %, besonders bevorzugt wenigstens 90 %, und/oder höchstens 130 %, bevorzugt höchstens 120 %, besonders bevorzugt höchstens 110 %, eines Innenvolumens eines im Wasserbehälter angeordneten Abschnitts der Abflussrohrleitung beträgt. Das Innenvolumen des im Wasserbehälter angeordneten Abschnitts der Abflussrohrleitung ist dabei jenes Volumen, welches das Abwasser in jenem Abschnitt der Abwasserrohrleitung einnehmen kann, der sich vom Eintritt der Abwasserrohrleitung in den Wasserbehälter bis zum Austritt der Abwasserrohrleitung aus dem Wasserbehälter erstreckt. Idealerweise kann dem Abwasser genau dann die meiste Wärmeenergie entzogen werden, wenn in jeder Teilabpumpsequenz das Innenvolumen des im Wasserbehälter angeordneten Abschnitts der Abflussrohrleitung vorteilhafterweise mit neuem Abwasser gefüllt wird. Durch die Verwendung der angegebenen Mindestwerte und Maximalwerte für die Teilvolumina kann dieses Ziel zumindest annähernd erreicht werden.

Zusammenfassend betrachtet wird eine im Spülbehälter oder verallgemeinert ausgedrückt im Flüssigkeitssystem, insbesondere Flüssigkeitsumwälzkreislauf, der Geschirrspülmaschine vorhandene, für die und/oder bei der Durchführung eines Teilspülgangs eines Spülgangs mittels einer Heizeinrichtung erwärmte Gesamtflüssigkeitsmenge nicht während einer einzigen, kontinuierlichen Abpumpphase aus dem Spülbehälter oder verallgemeinert ausgedrückt aus dem Flüssigkeitssystem mittels einer Abwasserpumpe abgepumpt, sondern es werden vorteilhafterweise mehrere Teilmengen der im Spülbehälter oder verallgemeinert ausgedrückt Flüssigkeitssystem vorhandenen Gesamtflüssigkeitsmenge während mehrerer Teilabpumpschritte, die durch vorzugsweise vorgegebene Wartezeiten bzw. Pausenzeiten von Abpumppausenschritten voneinander getrennt sind, schrittweise aus der Geschirrspülmaschine entfernt. Zum Flüssigkeitssystem zählen insbesondere ein Pumpentopf, eine Umwälzpumpe, die Laugenpumpe, ein oder mehrere Zuführleitungen zu den ein oder mehreren Sprüheinrichtungen, bevorzugt rotierbaren Sprüharmen, die Sprüheinrichtungen, und /oder die Leitungen vom Pumpentopf zur Umwälzpumpe und/oder Laugenpumpe, sowie sonstige Komponenten des Flüssigkeits-Umwälzkreislaufes der Geschirrspülmaschine, usw. Zwischen den konsekutiven Abpumpschritten je zweier zeitlich aufeinanderfolgender Teilabpumpsequenzen ist eine vorzugsweise definierte Wartezeit bzw. Verweilzeitdauer vorteilhaft derart eingefügt, dass während dieser das Gefälle, d.h. die Differenz zwischen der Temperatur des jeweiligen Abwasser- Teilvolumens, das in den jeweilig im Wasserbehälter angeordneten Abschnitt der Abflussrohrleitung gepumpt worden ist und dort verweilt, und der Temperatur des jeweilig im Wasserbehälter bevorrateten, zu erwärmenden Wassers, das dem Spülbehälter oder verallgemeinert dem Flüssigkeitssystem teilweise oder vollständig für einen flüssigkeitsführenden Teilspülgang wie z.B. dem Reinigungsgang eines Spülgangs zugeführt werden soll, für einen effizienten Wärmeenergietransfer noch ausreichend groß genug ist. Die Wartezeit ist insbesondere maximal derart gewählt, dass sie der Zeitdauer entspricht, bis sich die Temperatur des Abwassers im Abschnitt der Abflussrohrleitung, der durch den Wasserbehälter geführt ist, und die Temperatur des jeweilig im Wasserbehälter bevorrateten Wassers aneinander weitgehend angepasst haben. Für einen effizienten Wärmeübertrag kann dabei eine Wartezeit vorzugsweise zwischen 30% und 80%, insbesondere zwischen 40% und 70%, dieser maximalen Wartezeit ausreichend sein.

Nach einer weiteren bevorzugten Weiterbildung der Erfindung ist das Spülprogramm so ausgebildet, dass das Teilvolumen des Abwassers, welches während der ersten Teilabpumpsequenz der Teilabpumpsequenzen abgepumpt ist, gegenüber dem Teilvolumen der folgenden Teilabpumpsequenzen um ein Zusatzvolumen erhöht ist, welches wenigstens 70 %, bevorzugt wenigstens 80 %, besonders bevorzugt wenigstens 90 %, und/oder höchstens 130 %, bevorzugt höchstens 120 %, besonders bevorzugt höchstens 110 %, eines Innenvolumens eines zwischen dem Ausgang der Laugen- bzw. Abwasserpumpe und dem Eingang des Wasserbehälters angeordneten Abschnitts der Abflussrohrleitung beträgt. Das Innenvolumen eines zwischen dem Ausgang der Laugenpumpe und dem Eingang des Wasserbehälters angeordneten Abschnitts der Abflussrohrleitung ist dabei jenes Volumen, welches das Abwasser in jenem Abschnitt der Abwasserrohrleitung einnehmen kann, der sich von der Laugenpumpe bis zum Eintritt der Abwasserrohrleitung in den Wasserbehälter erstreckt. Idealerweise kann dem Abwasser vorzugsweise in der ersten Teilabpumpsequenz der Abpumpsequenz genau dann die meiste Wärmeenergie entzogen werden, wenn solange abgepumpt wird, bis das Abwasser, welches sich als in der Regel kalte oder erkaltete Flüssigkeit zu Beginn der ersten Teilabpumpsequenz in demjenigen Abschnitt der Abflussrohrleitung, der sich zwischen der Laugenpumpe und dem Wasserbehälter befindet, durch den im Wasserbehälter angeordneten Abschnitt der Abflussrohrleitung hindurchgepumpt wird, so dass der im Wasserbehälter angeordnete Abschnitt der Abflussrohrleitung vollständig mit warmem Abwasser aus dem Spülbehälter gefüllt und erwärmt wird. Durch die Verwendung der angegebenen Mindestwerte und Maximalwerte für das Zusatzvolumen kann dieses Ziel zumindest annähernd erreicht werden.

Gemäß einer bevorzugten Weiterbildung der Erfindung ist der Laugenpumpe eine Leistungserkennungseinrichtung zugeordnet, welche mit der Steuereinrichtung zur Übertragung von Leistungsmesswerten verbunden ist, wobei die Steuereinrichtung zur Steuerung des Teilvolumens des Abwassers, welches während einer der Teilabpumpsequenzen abgepumpt ist, anhand der Leistungsmesswerte ausgebildet ist. Die Leistung der Laugenpumpe korrespondiert mit der Fördergeschwindigkeit der Laugenpumpe, so dass aus der abgelaufenen Zeit und der Leistung das abgepumpte Volumen ermittelt werden kann. Die Leistungserkennungseinrichtung kann zur Ermittlung der Leistung der Laugenpumpe deren elektrische Leistungsaufnahme, beispielsweise durch Strom- und/oder Spannungsmessung, erfassen. Auf diese Weise kann das jeweils abzupumpende Teilvolumen exakt eingehalten werden, ohne dass es hierzu eines separaten Sensors, beispielsweise eines Durchflussmengensensors, wie etwa einem Flügelradsensor, bedarf. Hierdurch kann die Wärmeübertragung weiter optimiert werden und der bauliche Aufwand bei der erfindungsgemäßen Geschirrspülmaschine gering gehalten werden.

Nach einer bevorzugten Weiterbildung der Erfindung ist das Spülprogramm so ausgebildet, dass eine Dauer jeweils eines der Abpumppausenschritte anhand einer Temperatur des jeweilig bevorrateten Wassers und/oder anhand einer Temperatur des aus dem Spülbehälter oder verallgemeinert betrachtet Flüssigkeitssystem abzupumpenden Abwassers gesteuert, d.h. verallgemeinert ausgedrückt eingestellt ist. Dem liegt die Überlegung zu Grunde, dass die optimale Dauer der Abpumppausenschritte unter anderem von der Temperaturdifferenz zwischen der Temperatur des jeweilig im Wasserbehälter bevorrateten Wasser und der Temperatur des Abwassers abhängig ist. Dabei gilt: Je höher die Temperaturdifferenz ist, desto länger kann die optimale Dauer sein.

Insbesondere ist es ggf. möglich, einen Sensor zur Messung der Temperatur des bevorrateten Wassers vorzusehen, der mit der Steuereinrichtung zur Übermittlung von entsprechenden Messwerten verbunden ist. Sofern es sich bei dem jeweilig bevorrateten Wasser um Frischwasser handelt, kann es jedoch in vielen Fällen ausreichend sein, die am Betriebsort vorhandene Temperatur des Frischwassers, beispielsweise über eine Bedieneinrichtung in der Steuereinrichtung, zu hinterlegen, da sich typischerweise die Temperatur des Frischwasser im Zeitverlauf nur wenig ändert. Ebenso ist es möglich, einen Sensor zur Messung der Temperatur des Abwassers vorzusehen, der mit der Steuereinrichtung zur Übermittlung von entsprechenden Messwerten verbunden ist. Ein solcher Sensor steht in vielen Fällen ohnehin zur Verfügung, um eine Heizeinrichtung der Geschirrspülmaschine zielgerichtet zur Erwärmung der Spülflottenflüssigkeit im Spülbehälter oder verallgemeinert betrachtet Flüssigkeitssystem auf eine gewünschte Endtemperatur einstellen zu können.

Nach einer bevorzugten Weiterbildung der Erfindung ist das Spülprogramm so ausgebildet, dass die Abpumpsequenz bevorzugt am Ende wenigstens eines beheizten wasserführenden Programmschritts durchgeführt ist. Ein beheizter wasserführender Programmschritt ist vorzugsweise ein solcher Programmschritt, bei dem eine bestimmte Flüssigkeitsmenge im Flüssigkeitssystem der Geschirrspülmaschine, insbesondere in deren Spülbehälter, mittels wenigstens einer Heizeinrichtung auf eine gewünschte Zieltemperatur gebracht wird. Mit der derart erhitzten Flüssigkeit wird dann das Spülgut in der Spülkammer mittels der ein oder mehreren Sprüheinrichtungen behandelt. Sofern dann die erfindungsgemäß ausgebildete Abpumpsequenz vorteilhafterweise am Ende eines solchen beheizten wasserführenden Programmschritts, beispielsweise eines Reinigungsschritts oder eines Klarspülschritts, durchgeführt ist, können besonders große Wärmemengen aus dem für diesen Programmschritt bzw. damit einhergehenden Teilspülgang verwendeten beheizten bzw. erwärmten Wasser zurückgewonnen werden. Daher kann es insbesondere zweckmäßig sein, wenn die Abpumpsequenz am Ende eines jeden beheizten wasserführenden Programmschritts eines Spülprogramms durchgeführt wird.

Zusätzlich oder unabhängig hiervon kann aber auch die Durchführung der Abpumpsequenz am Ende wenigstens eines unbeheizten wasserführenden Programmschritts sinnvoll sein, da die Temperatur des Abwassers am Ende eines unbeheizten wasserführenden Programmschritts in vielen Fällen über der Temperatur des jeweilig bevorrateten Wassers liegt. Dies ist z.B. dann der Fall, wenn der Spülbehälter oder verallgemeinert ausgedrückt das Flüssigkeitssystem der Geschirrspülmaschine in einem dem unbeheizten wasserführenden Programmschritt vorausgehenden Programmschritt mit erhitzter bzw. erwärmter Flüssigkeit beaufschlagt worden ist, und dann der Spülbehälter und/oder die übrigen Komponeneten des Flüssigkeitssystems schon vorerwärmt sind. Daher kann es insbesondere zweckmäßig sein, wenn die Abpumpsequenz am Ende eines jeden unbeheizten wasserführenden Programmschritts eines Spülprogramms durchgeführt wird.

Gemäß einer bevorzugten Weiterbildung der Erfindung ist die Abflussrohrleitung beispielsweise als Abflussschlauch ausgebildet. Unter einem Schlauch ist hierbei eine flexible Leitung, insbesondere aus Kunststoff, zu verstehen. Solche Schlauchleitungen sind einfach und kostengünstig zu fertigen und können aufgrund ihrer Flexibilität einfach im Wasserbehälter montiert werden.

Nach einer bevorzugten Weiterbildung der Erfindung ist die Abflussrohrleitung als Wellenrohrleitung ausgebildet, die eine Vielzahl von sich abwechselnden Wellentälern und Wellenbergen aufweist. Eine Wellenrohrleitung hat eine große Oberfläche, was eine schnelle Wärmeübertragung und einen hohen Wirkungsgrad des Wärmetauschers ermöglicht. Der Außendurchmesser der Wellenrohrleitung kann dabei in den Wellentälern beispielsweise 10 - 16 mm betragen. An den Wellenbergen kann der Außendurchmesser der Wellenrohrleitung beispielsweise 18 - 22 mm betragen. Der Längsabstand zwischen benachbarten Wellenbergen der Wellenrohrleitung kann beispielsweise 2 - 5 mm betragen.

Gemäß einer bevorzugten Weiterbildung der Erfindung ist die Abflussrohrleitung vorzugsweise als Rohrschlange mäandernd durch den Wasserbehälter geführt. Dies vergrößert die Oberfläche der Abflussrohrleitung im Wasserbehälter, was eine schnelle Wärmeübertragung und einen höheren Wirkungsgrad des Wärmetauschers ermöglicht.

Gemäß einer zweckmäßigen Weiterbildung der Erfindung ist der Spülbehälter vorzugsweise wärmeleitend mit dem Wasserbehälter verbunden. Somit wirkt der Wasserbehälter insgesamt als Wärmetauscher und entzieht dem erhitzten Spülwasser im Spülbehälter Wärme. Diese Wärmetauscherfunktion des Wasserbehälters unterstützt insbesondere den abschließenden Trocknungsgang des jeweiligen Spülprogramms, da z.B. eine Wandung des Spülbehälters, mit der der Wasserbehälter wärmeleitend verbunden ist, durch in den Wasserbehälter eingefülltes Frisch-, bevorzugt Kaltwasser, gekühlt werden kann, so dass an ihr im Innenraum des Spülbehälters Feuchtigkeit aus der Luft auskondensieren kann, die während ein oder mehrerer vorausgehender wasserführender Teilspülgänge wie z.B. dem Klarspülgang erwärmt bzw. erhitzt worden und deshalb mit Feuchtigkeit beladen ist.

Nach einer bevorzugten Weiterbildung der Erfindung ist die Abflussrohrleitung zur einstückigen Verbindung einer Laugenpumpe der Geschirrspülmaschine mit einer Abwasserentsorgungseinrichtung ausgebildet. In diesem Fall sind neben der Abflussrohrleitung keine weiteren Rohrstücke zwischen der Laugenpumpe und der Abwasserentsorgungseinrichtung vorzusehen. Somit müssen keine zusätzlichen Dichtstellen oder Kopplungsstücke in oder an der Abflussrohrleitung vorgesehen werden. Ferner kann somit die Abflussrohrleitung bereits vor der Montage im Wasserbehälter auf Dichtigkeit geprüft werden.

Gemäß einer bevorzugten Weiterbildung der Erfindung ist die Abflussrohrleitung eingangsseitig durch den Boden des Wasserbehälters geführt. Somit ist eine geringe Entfernung zur Laugenpumpe zum Abpumpen des Spülwassers aus dem Spülbehälter gewährleistet.

Nach einer bevorzugten Weiterbildung der Erfindung ist die Abflussrohrleitung eingangsseitig von einem unteren Teil des Wasserbehälters im Wesentlichen senkrecht zu einem oberen Teil des Wasserbehälters geführt. Somit wird der eingangsseitig höhere Druck durch die Laugenpumpe zum Abpumpen des Spülwassers aus dem Spülbehälter optimal genutzt.

Sonstige vorteilhafte Aus- und Weiterbildungen der erfindungsgemäßen Geschirrspülmaschine sind in den Unteransprüchen wiedergegeben.

Weiterhin betrifft die Erfindung ein Verfahren zum Betreiben einer Geschirrspülmaschine, insbesondere nach einem der vorstehenden Ansprüche, mit einer Steuereinrichtung zur Steuerung eines Spülgangs zum Reinigen von Spülgut anhand wenigstens eines in der Steuereinrichtung hinterlegten Spülprogramms, mit einem Spülbehälter zur Aufnahme des Spülguts während des Spülgangs, mit einem Wasserbehälter zum Bevorraten von Wasser, insbesondere von Frischwasser, und mit einer durch die Steuereinrichtung steuerbaren Laugenpumpe zum Abpumpen von Abwasser aus dem Spülbehälter über eine Abflussrohrleitung, die durch den Wasserbehälter hindurchgeführt ist.

Bei dem erfindungsgemäßen Verfahren ist vorgesehen, dass das Spülprogramm so ausgebildet ist, dass das Abwasser wenigstens einmal mittels einer Abpumpsequenz abgepumpt wird, welche wenigstens eine Teilabpumpsequenz umfasst, die jeweils einen Abpumpschritt zum Abpumpen einer Teilvolumens des Abwassers und einen darauffolgenden Abpumppausenschritt zum Übertragen von Wärmeenergie von dem Teilvolumen des Abwassers auf das bevorratete Wasser aufweist.

Das erfindungsgemäße Verfahren ermöglicht eine hohe Reinigungs- und/oder Trocknungseffizienz der Geschirrspülmaschine mit einem energiereduzierten Aufwand.

Vorteilhafte Aus- und Weiterbildungen des erfindungsgemäßen Verfahrens sind bei der Beschreibung der beanspruchten Geschirrspülmaschine erläutert.

Die vorstehend erläuterten und/oder in den Unteransprüchen wiedergegebenen vorteilhaften Aus- und Weiterbildungen der Erfindung können dabei - außer z. B. in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen, jeweils in einer schematischen Prinzipskizze:
- Figur 1: ein vorteilhaftes Ausführungsbeispiel einer erfindungsgemäßen Haushaltsgeschirrspülmaschine in einer schematischen Seitenansicht,
- Figur 2: eine schematische Schnittansicht durch einen Wasserbehälter der Geschirrspülmaschine der Figur 1 bei Blickrichtung senkrecht zu dessen Wandfläche, die außen an einer Wand des Spülbehälters der Geschirrspülmaschine montiert ist und etwa parallel zu dieser verläuft,
- Figur 3: ein Funktionsdiagramm der Geschirrspülmaschine der Figuren 1 und 2,
- Figur 4: einen beispielhaften Betriebsablauf der erfindungsgemäßen Geschirrspülmaschine der Figuren 1 bis 3,
- Figur 5: eine Detaildarstellung der Abpumpsequenzen der Figur 4, und
- Figur 6: eine Darstellung der abzupumpenden Teilvolumina während der Abpumpsequenzen.

In den folgenden Figuren sind einander entsprechende Teile mit denselben Bezugszeichen versehen. Dabei sind nur diejenigen Bestandteile einer Geschirrspülmaschine mit Bezugszeichen versehen und erläutert, welche für das Verständnis der Erfindung erforderlich sind. Es versteht sich von selbst, dass die erfindungsgemäße Geschirrspülmaschine weitere Teile und Baugruppen umfassen kann.

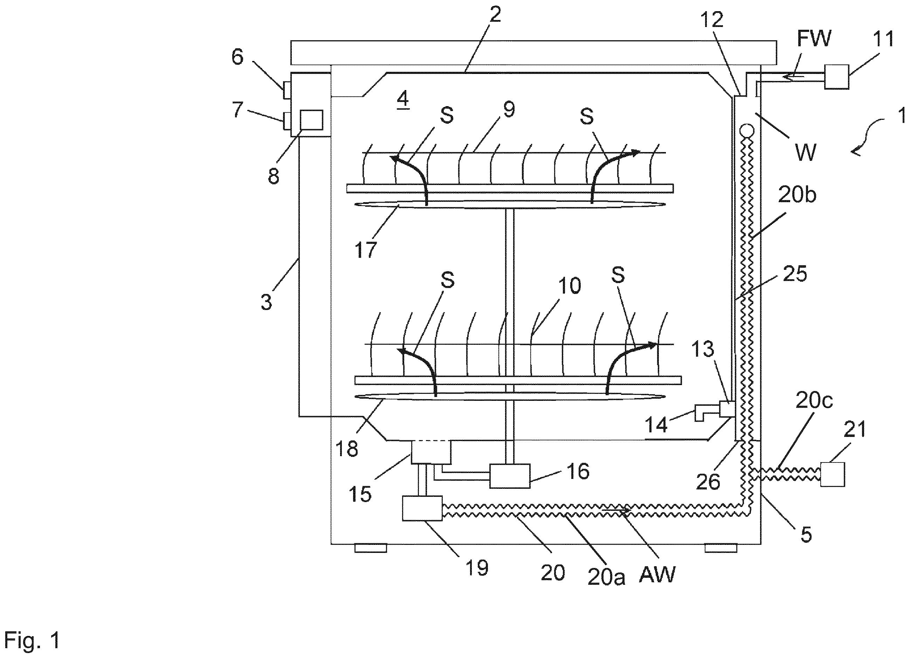

In der Figur 1 ist eine schematische Seitenansicht einer Geschirrspülmaschine 1 gemäß einem vorteilhaften Ausführungsbeispiel dargestellt. Die Geschirrspülmaschine 1 umfasst einen Spülbehälter 2, der durch eine Tür 3 wasserdicht verschließbar ist. Der Spülbehälter 2 und die Tür 3 bilden somit eine Spülkammer 4 zum Spülen von Spülgut. Dabei kann der Spülbehälter 2 im Inneren eines Gehäuses 5 angeordnet sein. Dieses Gehäuse 5 kann teilweise oder ganz weggelassen sein, wie z.B. bei Einbau-Geschirrspülmaschinen. Der Spülbehälter 2 kann beispielsweise aus Edelstahl mit einer Dicke von z.B. ca. 0,4 mm gefertigt sein. Die Tür 3 ist in Figur 1 in ihrer geschlossenen Stellung dargestellt. Durch Schwenken um eine am unteren Ende der Tür 3 vorgesehene Schwenkachse kann die Tür 3 zur Vorderseite hin geöffnet werden und Spülgut kann in die Geschirrspülmaschine 1 eingestellt oder daraus entnommen werden.

Am oberen Ende der Tür 3 können eine Bedieneinrichtung 6 und eine Anzeigeeinrichtung 7 vorgesehen sein, welche operativ mit einer Steuereinrichtung 8 verbunden sind. In der Steuereinrichtung 8 sind mehrere Spülprogramme gespeichert, welche mit Hilfe der Bedieneinrichtung 6 ausgewählt und gestartet werden können. Die Anzeigeeinrichtung 7 zeigt Statusinformationen an, z. B. über das ausgewählte Spülprogramm oder den Ablauf desselben. Die Steuereinrichtung 8 übernimmt Steuer- und/oder Regelungsfunktionen, d.h. verallgemeinert ausgedrückt Kontrollfunktionen für den Betrieb der Geschirrspülmaschine.

Die Geschirrspülmaschine 1 weist ferner einen oberen Geschirrkorb 9 und einen unteren Geschirrkorb 10 auf, in welche zu spülendes Geschirr jeweils eingestellt werden kann. Die Geschirrkörbe 9 und 10 können z.B. an Ausfahrschienen angeordnet sein, welche an sich gegenüberliegenden, in Tiefenrichtung erstreckenden Seitenwänden des Spülbehälters 2 befestigt sind. Ggf. kann zusätzlich auch eine aus der Spülkammer heraus- sowie in diese hineinbewegliche Besteckschublade vorhanden sein.

Als Spülwasser S zum Spülen des Spülguts kann Frischwasser FW verwendet werden, welches von einer Wasserversorgungseinrichtung 11, beispielsweise einem Wasserversorgungsnetz, aufgenommen und in die Spülkammer 4 geleitet werden kann. Hierzu wird das Frischwasser FW zunächst in einen Wasserbehälter 12 geleitet. Dieser ist hier im Ausführungsbeispiel an der Rückwand des Spülbehälters 2 angebracht. Zusätzlich oder unabhängig hiervon kann er zweckmäßigerweise an einer der beiden Seitenwände der Geschirrspülmaschine (bei Blickrichtung der Geschirrspülmaschine von vorne) angeordnet sein. Das Frischwasser FW kann durch diesen Wasserbehälter 12 direkt hindurchlaufen und in den Innenraum bzw. die Spülkammer 4 des Spülbehälters 2 hineinlaufen, wenn ein Ablaufventil 13 an seinem Ausgang oder in einer mit diesem verbundenen Auslaufleitung geöffnet ist. Das Frischwasser FW kann also den Wasserbehälter 12 durchströmend als Spülflotte über das Ablaufventil 13 und einen Wassereinlass 14 in die Spülkammer 4 eingelassen werden. Dieses Ablaufventil 13 kann beispielsweise als elektrisch schaltbares Ventil ausgebildet sein. Das in die Spülkammer 4 eingelassene Spülwasser S sammelt sich in einem Sumpf bzw. topfförmigen Sammelbehälter 15 (sogenannter Pumpensumpf), der am Boden des Spülbehälters 2 vorgesehen ist. Ist das Ablaufventil 13 geschlossen, so kann das aus der Wasserversorgungseinrichtung 11 einlaufende Frischwasser im Wasserbehälter 12 gesammelt werden.

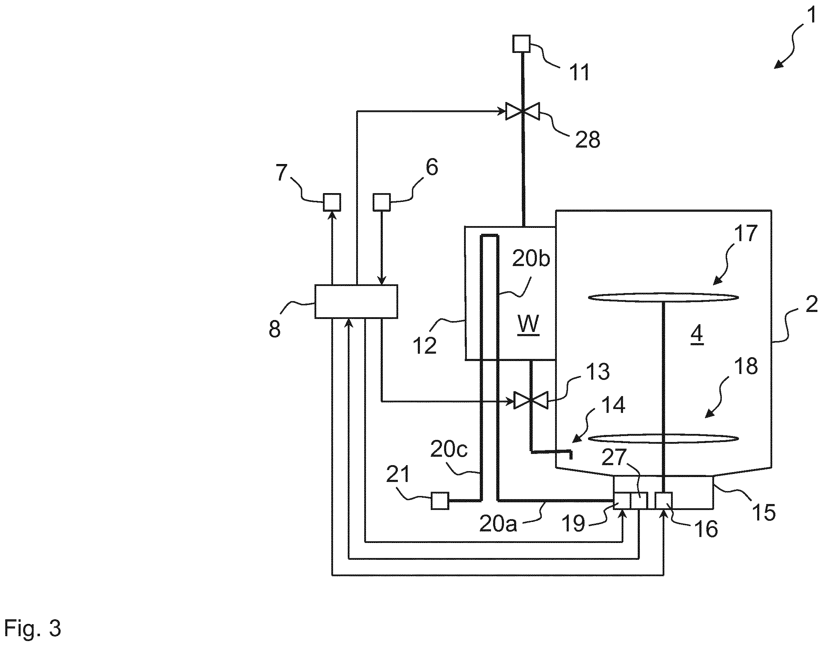

In der Zuleitung zwischen der Wasserversorgungseinrichtung 11 und dem Wasserbehälter 12 kann ein Einlaufventil eingefügt sein. Dieses ist hier in Figur 1 der Übersichtlichkeit halber weggelassen worden (siehe das Einlaufventil 28 in der Figur 3). Es kann insbesondere mittels der Steuereinrichtung 8 über eine Steuerleitung (hier in Figur 1 weggelassen) geöffnet und geschlossen werden.

Unterhalb des Sammelbehälters 15 ist eine Heizpumpe 16 vorgesehen, welche eine Umwälzpumpe und eine Heizeinrichtung umfasst. Eingangsseitig ist die Umwälzpumpe 16 mit dem Sammelbehälter 15 verbunden, und ausgangsseitig ist die Umwälzpumpe 16 mit einer Sprüheinrichtung verbunden. Die Sprüheinrichtung umfasst einen oberen rotierbaren Sprüharm 17 sowie einen unteren rotierbaren Sprüharm 18. Bei eingeschalteter Umwälzpumpe 16 gelangt das Spülwasser S in die Sprüharme 17 und 18 und wird von diesen ausgestoßen. Hierdurch werden die Sprüharme 17 und 18 in Rotation versetzt und das Spülwasser S wird in der Spülkammer 4 und auf das darin vorgesehene Spülgut verteilt. Anschließend fließt das Spülwasser S zurück in den Sammelbehälter 15.

Nach Abschluss eines Spülprogramms wird die Umwälzpumpe 16 abgestellt, und das im Sammelbehälter 15 gesammelte Spülwasser wird als Abwasser AW mit Hilfe einer Laugen- bzw. Abwasserpumpe 19 abgepumpt. Das Abwasser AW wird von der Laugenpumpe 19 über eine Abflussrohrleitung 20 zu einer Abwasserentsorgungseinrichtung 21 gepumpt. Die Abwasserentsorgungseinrichtung 21 kann beispielsweise ein Abwasserrohr einer gebäudeseitigen Wasserinstallation sein.

Die Abflussrohrleitung 20 umfasst (in Abpumprichtung betrachtet) einen zwischen dem Ausgang der Laugenpumpe 19 und dem Einlass bzw. Eingang des Wasserbehälters 12 angeordneten Abschnitt 20a, einen im Wasserbehälter 12 angeordneten Abschnitt 20b und einen zwischen dem Wasserbehälter 12 und der Abwasserentsorgungseinrichtung 22 angeordneten Abschnitt 20c. Der Abschnitt 20b liegt bei vollständig gefülltem Wasserbehälter 12 im Wasser des Wasserbehälters.

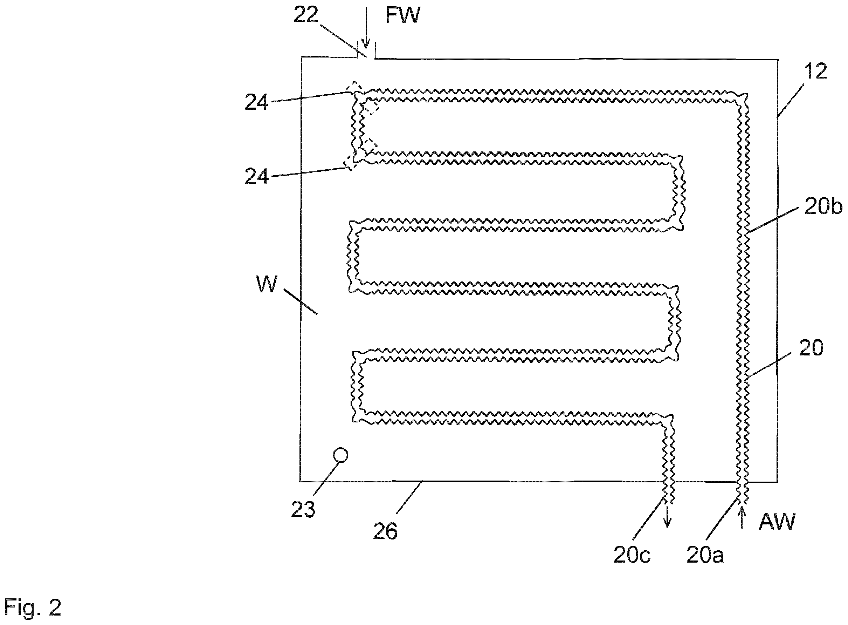

Figur 2 zeigt eine schematische Schnittansicht des Wasserbehälters 12 sowie einen beispielhaften Verlauf der Abflussrohrleitung 20 durch den Wasserbehälter 12. Die Ansicht ergibt sich bei einem Schnitt in einer Ebene parallel zur Wandfläche des Spülbehälters, an der der Wasserbehälter montiert ist, und wenn senkrecht zu derjenigen Wandfläche des Wasserbehälters 12 geblickt wird, die etwa parallel zur Montagewand des Spülbehälters verläuft, an der der Wasserbehälter angebracht ist. Der Wasserbehälter 12 kann räumlich betrachtet beispielsweise flach quaderförmig ausgebildet sein, mit einer Höhe von etwa 50 cm, einer Breite von etwa 50 cm und einer räumlichen Tiefe von etwa 3 cm. Der Wasserbehälter 12 kann aus Kunststoff, z. B. aus Polypropylen, oder aus Metall gefertigt sein. Frischwasser FW wird durch eine obere Öffnung 22 in den Wasserbehälter 12 geführt und kann durch eine untere Öffnung 23 über das Zulaufventil 13 dem Spülbehälter 2 zugeführt werden. Im dargestellten Beispiel verläuft die Abflussrohrleitung 20 von der Laugenpumpe 19 zunächst zu einem Ort unterhalb des Wasserbehälters 12, tritt am Boden (bzw. einer unteren Wandung) 26 des Wasserbehälters 12 in diesen ein, ist mäandernd durch den Wasserbehälter 12 geführt, tritt am Boden 26 des Wasserbehälters 12 wieder aus diesem heraus, und ist durch eine Öffnung im Gehäuse 5 mit der Abwasserentsorgungseinrichtung 21 verbunden. Das durch den Wasserbehälter 12 hindurchlaufende oder im Wasserbehälter 12 gesammelte Frischwasser FW hat typischerweise eine Temperatur von 5° C bis 25° C. Wenn dieses aus dem Wasserbehälter 12 über das Ablaufventil 13 und den Wassereinlass 14 in den Spülbehälter 2 und/oder das Flüssigkeitssystem der Geschirrspülmaschine eingelassen worden ist, kann es dort mittels der Heizeinrichtung der Heizpumpe 16 je nach Spülprogramm auf eine gewünschte Temperatur, beispielsweise von 50° C bis 75° C, für einen wasserführenden Teilspülgang erwärmt bzw. erhitzt werden. Dementsprechend kann auch das durch die Abflussrohrleitung 20 geführte Abwasser AW beim Abpumpen eine Temperatur von beispielsweise 50° C bis 75° C haben. Dabei erfolgt das Abpumpen vorzugsweise am Ende oder nach dem Ende des wasserführenden Teilspülgangs. Das in der Abflussrohrleitung 20 durch den Wasserbehälter 12 geführte Abwasser AW erwärmt nun im Wasserbehälter 12 für den nächsten Spülgang bereitgehaltenes, durch Schließen des Ablaufventils 13 gespeichertes Frischwasser FW oder anderes bevorratetes Wasser, so dass der Wasserbehälter 12 als Wärmetauscher wirkt. Somit kann die Heizeinrichtung zum Aufheizen von Frischwasser FW, das im Wasserbehälter zwischengespeichert wird, mit geringerem Energieeinsatz betrieben werden, so dass Energie gespart werden kann.

Im dargestellten Beispiel steigt die Abflussrohrleitung 20 im Wasserbehälter 12 eingangsseitig zunächst vom Boden, also von einem unteren Teil des Wasserbehälters 12, insbesondere im Wesentlichen senkrecht (beispielsweise mit einem Winkel kleiner als 20° gegenüber der Vertikalen), nach oben bis nahe an die Decke, also einem oberen Teil des Wasserbehälters 12. Somit wird der eingangsseitig höhere Druck durch die Laugenpumpe 19 im Abwasser AW optimal genutzt. Vom höchsten Punkt innerhalb des Wasserbehälters 12 ist die Abflussrohrleitung 20 in mehreren Schleifen mäandernd wieder nach unten in Richtung zum Boden 26 des Wasserbehälters 12 geführt. Somit wird eine Vergrößerung der Fläche der Abflussrohrleitung 20 erreicht, die einen höheren Wirkungsgrad des Wärmetauschers bewirkt. Die Abflussrohrleitung 20 kann dabei vorzugsweise durch mehrere, in der Darstellung der Figur 2 lediglich in der linken oberen Ecke angedeutete, Clipse 24 oder sonstige Befestigungsmittel an einer Wandung des Wasserbehälters 12 fixiert werden. Die Abflussrohrleitung 20 kann auch in anderer Weise durch den Wasserbehälter 12 hindurchgeführt sein. Zum Beispiel kann die Abflussrohrleitung 20 mäandernd vom Boden zur Decke des Wasserbehälters 12 geführt sein.

In einer bevorzugten Ausführungsform ist die Abflussrohrleitung 20 als Wellschlauch 20 ausgebildet. Unter einem Wellschlauch 20 ist hierbei ein Schlauch zu verstehen, dessen Wandung eine Wellenform aufweist. Auf diese Weise wird eine Vergrößerung der Oberfläche der Abflussrohrleitung 20 erreicht, die eine schnelle Wärmeübertragung und einen höheren Wirkungsgrad des Wärmetauschers bewirkt. Die Wellenperiode kann beispielsweise 2 - 5 mm betragen. Bevorzugt ist eine Wellenperiode von etwa 3 mm. In den Wellentälern des Wellschlauchs, also den Abschnitten der gewellten Abflussrohrleitung 20 mit dem geringsten Außendurchmesser, kann der Außendurchmesser der Abflussrohrleitung 20 beispielsweise 10 - 16 mm, vorzugsweise 12 - 14 mm betragen. An den Wellenbergen, also den Abschnitten der gewellten Abflussrohrleitung 20 mit dem höchsten Außendurchmesser, kann der Außendurchmesser der Abflussrohrleitung 20 beispielsweise 16 - 24 mm, vorzugsweise 18 - 22 mm betragen. Die Wanddicke der Abflussrohrleitung 20 ist nicht dicker als 1 mm, und vorzugsweise nicht dicker als 0,5 mm. Bei einer solch dünnen Wandstärke kann eine schnelle Wärmeübertragung und ein hoher Wirkungsgrad des Wärmetauschers bewirkt werden.

Ein solcher Wellschlauch 20 kann kostengünstig aus Kunststoff, wie z. B. Polypropylen oder dergleichen, hergestellt sein. Beispielsweise ist eine kostengünstige Fertigung durch Extrusion mit Hilfe eines Korrugators möglich, was eine einfache Einstellung der Wellenform sowie der Wanddicke ermöglicht. Es ist jedoch auch möglich, die Abflussrohrleitung 20 aus einem anderen Material zu fertigen, beispielsweise aus Metall, wie z. B. Aluminium oder Kupfer. Mit einem metallischen Material können gute Wärmetauschereigenschaften erzielt werden. Kunststoff ist nicht nur chemisch widerstandfähig gegenüber der abgepumpten Lauge, sondern auch kostengünstig zu fertigen. Ferner kann ein Kunststoffwellschlauch 20 aufgrund seiner hohen Flexibilität einfach als Abflussrohrleitung 20, insbesondere in Mäanderform im Wasserbehälter 12, montiert werden.

Im dargestellten Beispiel ist die Abflussrohrleitung 20 einstückig ausgebildet. Damit ist lediglich ein durchgehender Wellschlauch 20 als Abflussrohrleitung 20 zwischen der Laugenpumpe 19 und der Abwasserentsorgungseinrichtung 21 vorgesehen. Somit müssen keine zusätzlichen Dichtstellen oder Kopplungsstücke in der Abflussrohrleitung 20 vorgesehen werden. Ferner kann somit die Abflussrohrleitung 20 bereits vor der Montage im Wasserbehälter 12 auf Dichtigkeit geprüft werden. Alternativ dazu ist es aber auch möglich, die Abflussrohrleitung 20 im Wasserbehälter 12 zu montieren und mit einem eingangsseitigen Anschlussstutzen und einem ausgangsseitigen Anschlussstutzen oder dergleichen zu versehen, welche mit Leitungen zur Laugenpumpe 19 bzw. der Abwasserentsorgungseinrichtung 21 verbunden werden können. Dies ermöglicht eine modulare Ausführung des Wasserbehälters 12.

Der Wasserbehälter 12 kann insbesondere in wärmeleitender Verbindung mit dem Spülbehälter 2 stehen. Beispielsweise kann die vom Gehäuse 5 abgewandte Seitenwand, d.h. die dem Spülbehälter zugewandte Seitenwand 25 des Wasserbehälters 12 in im Wesentlichen flächiger Verbindung mit einer Seitenwand oder wie hier im Ausführungsbeispiel von Figur 1 mit der Rückwand des Spülbehälters 2 stehen, oder mit einer dünnen Schicht Bitumen oder dergleichen von z. B. 2 mm Dicke an diesem fixiert sein. Eine solche wärmeleitende Verbindung zwischen Spülbehälter 2 und Wasserbehälter 12 bewirkt, dass die Erwärmung des Spülbehälters 2 durch das Spülwasser S zum Wärmetausch genutzt wird und Frischwasser FW, das im Wasserbehälter 12 durch Schließen des Ablaufventils 13 für seine Verwendung in mindestens einem nachfolgenden flüssigkeitsführenden Teilspülgang bevorratet wird, erwärmt wird.

Figur 3 zeigt ein Funktionsdiagramm der Geschirrspülmaschine der Figur 1. Die Bedieneinrichtung 6 ist dabei zur Übertragung von Bedienbefehlen mit der Steuereinrichtung 8 verbunden. Weiterhin ist die Anzeigeeinrichtung 7 zum Empfang von Statusinformationen mit der Steuereinrichtung 8 verbunden.

Das Ablaufventil 13 ist so mit der Steuereinrichtung 8 verbunden, dass die Steuereinrichtung 8 das Beschicken der Spülkammer 4 mit Wasser aus dem Wasserbehälter 12 in Abhängigkeit von einem ausgewählten Spülprogramm steuern kann.

Weiterhin ist die Heizpumpe 16 so mit der Steuereinrichtung 8 verbunden, dass die Umwälzpumpe der Heizpumpe 16 und die Heizeinrichtung der Heizpumpe 16 durch die Steuereinrichtung 8 steuerbar und/oder regelbar sind. Bei der Heizpumpe 16 ist sowohl die Heizfunktion als auch die Pumpfunktion durch die Steuereinrichtung 2 individuell steuerbar und/oder regelbar. Hierdurch ist es möglich, in der Spülkammer 4 angeordnetes Spülgut während eines Spülgangs mit Wasser zu beaufschlagen, welches gegebenenfalls beheizt ist.

Weiterhin ist die Steuereinrichtung 8 auch mit der Laugenpumpe 19 zu deren Steuerung und/oder Regelung verbunden. Der Laugenpumpe 19 ist zudem eine Leistungserkennungseinrichtung 27 zugeordnet, welche zur Erfassung der Leistungsaufnahme der Laugenpumpe 19 ausgebildet ist. Die Leistungserkennungseinrichtung 27 ist mit der Steuereinrichtung 8 zur Übertragung von Leistungsmesswerten verbunden, wobei die Steuereinrichtung 8 zur Steuerung und/oder Regelung, oder verallgemeinert betrachtet zur Kontrolle der Menge abzupumpenden Abwassers AW anhand der Leistungsmesswerte ausgebildet ist. Die Förderleistung sowie der damit einhergehende Mengendurchsatzder Laugenpumpe 19 korrespondiert mit der Fördergeschwindigkeit der Laugenpumpe 19. Aus der abgelaufenen Zeit im Förderbetrieb der Laugenpumpe und der erfassten Förderleistung ergibt sich das jeweilig abgepumpte Volumen. Die Leistungserkennungseinrichtung 27 kann zur Ermittlung der Förderleistung der Laugenpumpe 19 deren elektrische Leistungsaufnahme, beispielsweise durch Strom- und/oder Spannungsmessung, erfassen. Auf diese Weise kann die jeweils abzupumpende Menge an Abwasser AW exakt eingehalten werden, ohne dass es hierzu eines separaten Sensors, beispielsweise eines Durchflussmengensensors, wie etwa einem Flügelradsensor, bedarf.

Weiterhin ist zwischen der Wasserversorgungseinrichtung 11 und dem Wasserbehälter 12 ein Frischwasserventil 28 vorgesehen, welches mit der Steuereinrichtung 8 so verbunden ist, dass der Zulauf von Frischwasser FW in den Behälter 12 durch die Steuereinrichtung 8 in Abhängigkeit von dem Spülprogramm steuerbar ist.

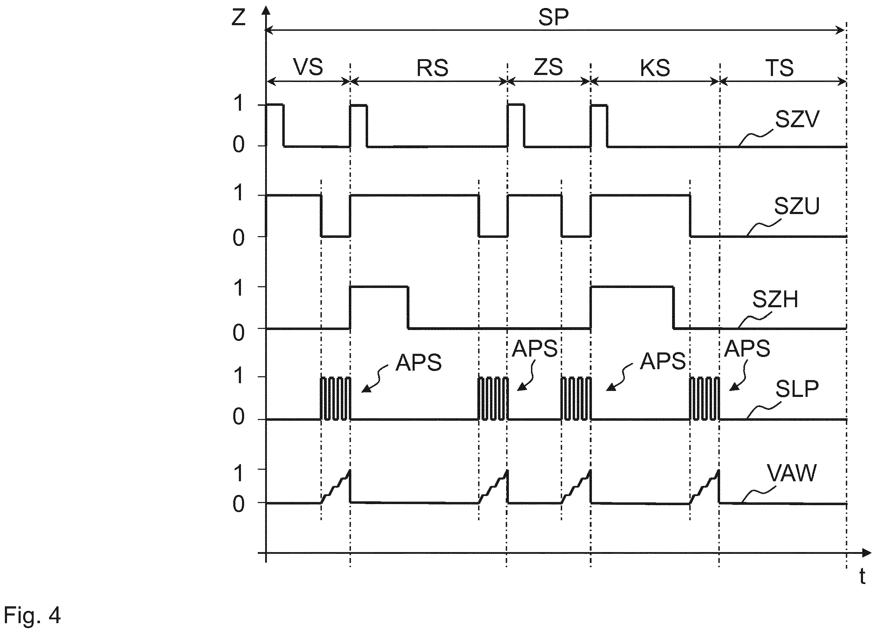

Figur 4 zeigt ein Funktionsdiagramm zur Erläuterung der Funktion der erfindungsgemäßen Geschirrspülmaschine 1 der Figuren 1 bis 3. Hierzu ist der Ablauf eines beispielhaften Spülprogramms SP dargestellt.

In Figur 4 sind auf einer gemeinsamen Zeitachse t die Kurven SZV, SZU, SZH, SLP und VAW dargestellt, welche Schalt- bzw. Betriebszustände von Komponenten der Geschirrspülmaschine 1 auf der Hochachse Z anzeigen.

Die Kurve SZV repräsentiert dabei den Schaltzustand des Ablaufventils 13 des Wasserbehälters der Geschirrspülmaschine 1. Der Schaltzustand "0" entspricht dabei einem geschlossenen Ventil 13, der Schaltzustand "1" einem geöffneten Ablaufventil 13.

Die Kurve SZU zeigt den Schaltzustand der Umwälzpumpe der Heizpumpe 16 und die Kurve SZH den Schaltzustand der Heizeinrichtung der Heizpumpe 16. Der Schaltzustand "0" entspricht dabei jeweils einer ausgeschalteten Umwälzpumpe bzw. Heizeinrichtung, der Schaltzustand "1" einer eingeschalteten Umwälzpumpe bzw. Heizeinrichtung.

Weiterhin zeigt die Kurve SLP den Schaltzustand der Abwasserpumpe 19 der Geschirrspülmaschine 1. Der Schaltzustand "0" entspricht dabei einer abgeschalteten Abwasserpumpe 19, der Schaltzustand "1" einer eingeschalteten Abwasserpumpe 19.

Die Kurve VAW symbolisiert das Volumen des abgepumpten Abwassers AW eines Programmschritts VS, RS, ZS, KS in einer relativen Darstellung. Der Zustand "0" bedeutet dabei, dass noch kein Abwasser abgepumpt ist, und der Zustand "1", dass das Abwasser eines Programmschritts VS, RS, ZS, KS im Wesentlichen vollständig abgepumpt ist.

In Figur 4 ist beispielhaft der Spülgang eines Spülprogramms SP dargestellt, welches zum Spülen von Spülgut unter Verwendung von Spülwasser S in dieser zeitlichen Reihenfolge einen Vorspülschritt VS, einen Reinigungsschritt RS, einen Zwischenspülschritt ZS und einen Klarspülschritt KS umfasst. Daran schließt sich ein Spülgangabschließender Trocknungsschritt TS zum Trocknen des gereinigten Spülguts an. In anderen Beispielen könnten ein oder mehrere dieser Programmschritte VS, RS, ZS, KS ausgeblendet bzw. weggelassen sein. Auch wären Beispiele möglich, bei denen einer oder mehrere Programmschritte VS, RS, ZS, KS mehrfach durchlaufen werden.

Der zunächst durchgeführte Vorspülschritt VS dient der Entfernung von gröberen Verschmutzungen vom Geschirr, um so den Reinigungsschritt RS vorzubereiten. Hierzu wird zu Beginn des Vorspülschritts VS das Ablaufventil 13 geöffnet, so dass Wasser aus dem Wasserbehälter 12 über den Wassereinlass 14 in die Spülkammer 4 gelangt. Wenn der Wasserbehälter 12 unbefüllt ist, wird das Frischwasserventil 28 geöffnet und Frischwasser aus der Frischwasserversorgungseinrichtung 11 durch den Wasserbehälter 12 bei geöffnetem Ablaufventil 13 direkt hindurchlaufend in die Spülkammer 4 eingelassen. Wenn der Wasserbehälter 12 mit Frischwasser vorbefüllt ist, das vorteilhafterweise z.B. am Ende des Klarspülschritts und/oder zu Beginn des Trocknungsschritts des vorausgehenden Spülgangs zur Bereitstellung einer den Trocknungsschritt unterstützenden Kondensationskühlungsfläche durch Öffnen des Einlaufventils 28 eingelassen und aufgrund des geschlossenen Ablaufventils 13 im Wasserbehälter 12 gespeichert worden ist, kann diese gespeicherte Wassermenge jetzt für den Vorspülschritt VZ durch Öffnen des Ablaufventils 13 in die Spülkammer 4 einlaufen. Reicht die gespeicherte Wassermenge des Wasserbehälters 12 für den Vorspülgang aus, so kann das Frischwasserventil 28 geschlossen bleiben (nur das Ablaufventil 13 ist dann geöffnet). Andernfalls, d.h. wenn die in ihm gespeicherte Wassermenge nicht für die Durchführung des Vorspülschritts VS ausreicht, wird zusätzlich das Frischwasserventil 28 geöffnet. Wenn die Spülkammer 4 mit einer für den Vorspülschritt VS ausreichenden Menge von Wasser aus dem Wasserbehälter 12 und/oder der Frischwasserversorgungseinrichtung 11 beschickt ist, wird/werden das Ablaufventil 13 und/oder Frischwasserventil 28 wieder geschlossen. Der Wasserbehälter 12 kann nun ggf. - in nicht gezeigter Weise - durch Schließen des Ablaufventils 13 und durch Öffnen des Frischwasserventils 28 mit Frischwasser FW neu befüllt werden.

Das dem Spülbehälter 2 zugeführte Wasser wird als Spülwasser S in der Spülkammer 4 mittels der Umwälzpumpe der Heizpumpe 16 für eine vorgegebene Zeit, im Regelfall ohne - im Ausnahmefall mit - Zuschaltung ihrer Heizeinrichtung, umgewälzt, um so das Spülgut mit Wasser zu beaufschlagen. Danach wird das nunmehr verschmutzte Wasser als Abwasser AW mittels der Laugenpumpe 19 in einer Abpumpsequenz APS nach außen abgepumpt.

Der im Anschluss an den Vorspülschritt VS durchgeführte Reinigungsschritt RS dient der gründlichen Reinigung des Spülguts. Hierzu wird zu Beginn des Reinigungsschritts RS das Ablaufventil 13 geöffnet, so dass im vorausgehenden Vorspülschritt VS, insbesondere am Ende des Vorspülschritts, über das geöffnete Frischwasserventil 28 in den Wasserbehälter 12 eingelassenes, dort bei geschlossenem Ablaufventil 13 bevorratetes Wasser W aus dem Wasserbehälter 12 über den Wassereinlass 14 in die Spülkammer 4 gelangt. Diese im Wasserbehälter 12 gespeicherte Frischwassermenge kann zur Beschickung der Spülkammer 4 mit einer geforderten Wassermenge für den Reinigungsschritt RS ggf. ausreichen. Wenn der Wasserbehälter 12 unbefüllt ist oder die in ihm gespeicherte Wassermenge nicht für die Durchführung des Reinigungsschritts RS ausreicht, wird das Frischwasserventil 28 geöffnet und Frischwasser aus der Frischwasserversorgungseinrichtung 11 durch den Wasserbehälter 12 bei geöffnetem Ablaufventil 13 direkt hindurchlaufend in die Spülkammer 4 eingelassen. Wenn die Spülkammer 4 mit einer für den Reinigungsschritt RS ausreichenden Menge von Wasser W aus dem Wasserbehälter 12 beschickt ist, wird das Ablaufventil 13 wieder geschlossen. Der Wasserbehälter 12 kann dann erneut durch Öffnen des Frischwasserventils 28 mit Frischwasser FW befüllt werden. Während des Reinigungsschritts RS ist es in aller Regel erforderlich, das Spülgut mit Wasser W zu beaufschlagen, welches eine vergleichsweise hohe Temperatur aufweist, um so eine hohe thermische Reinigungswirkung zu erzielen. Zudem wird dem Wasser im Allgemeinen Reinigungsmittel zugesetzt, dessen chemische Reinigungswirkung bei höherer Temperatur am besten ist. Üblicherweise ist daher für einen Reinigungsschritt RS eine Temperatur von ca. 50° C bis 70° C vorgesehen, so dass die für den Reinigungsschritt RS gewünschte Temperatur erreicht wird. Dazu wird das Wasser im Spülbehälter 2 und/oder Flüssigkeitssystem der Geschirrspülmaschine mittels der Heizeinrichtung der Heizpumpe 16 aufgeheizt. Das Wasser W wird nun als Spülwasser S in der Spülkammer 4 mittels der Umwälzpumpe der Heizpumpe 16 für eine vorgegebene Zeit, im Regelfall mit Zuschaltung ihrer Heizeinrichtung, umgewälzt, um so das Spülgut mit warmem Wasser zu beaufschlagen. Zum Abschluss des Reinigungsschritts RS wird das nunmehr verschmutzte Warmwasser mittels der Laugenpumpe 19 in einer erneuten Abpumpsequenz APS als Abwasser AW nach außen abgepumpt.

Der nunmehr nachfolgend durchgeführte Zwischenspülschritt ZS zum Entfernen von Reinigungsmittel vom Spülgut nach dem Reinigungsschritt RS sieht eine erneute Beschickung der Spülkammer 4 mit Wasser W aus dem Wasserbehälter 12 vor, um das Spülgut mit sauberem Wasser W beaufschlagen zu können. Hierzu wird zu Beginn des Zwischenspülschritts ZS das Ablaufventil 13 geöffnet, so dass im dem Zwischenspülschritt ZS vorausgehenden Reinigungsschritt RS, insbesondere am Ende des Reinigungsschritts, über das geöffnete Frischwasserventil 28 in den Wasserbehälter 12 eingelassenes, dort bei geschlossenem Ablaufventil 13 bevorratetes Wasser W aus dem Wasserbehälter 12 über den Wassereinlass 14 in die Spülkammer 4 gelangt. Diese im Wasserbehälter 12 gespeicherte Frischwassermenge kann zur Beschickung der Spülkammer 4 mit einer geforderten Wassermenge für den Zwischenspülschritt ZS ggf. ausreichen. Wenn der Wasserbehälter 12 unbefüllt ist oder die in ihm gespeicherte Wassermenge nicht für die Durchführung des Zwischenspülschritts ZS ausreicht, wird das Frischwasserventil 28 geöffnet und Frischwasser aus der Frischwasserversorgungseinrichtung 11 durch den Wasserbehälter 12 bei geöffnetem Ablaufventil 13 direkt hindurchlaufend in die Spülkammer 4 eingelassen. Wenn die Spülkammer 4 mit einer für den Zwischenspülschritt RS ausreichenden Menge von Wasser W aus dem Wasserbehälter 12 beschickt ist, wird das Ablaufventil 13 wieder geschlossen. Der Wasserbehälter 12 kann nun erneut durch Öffnen des Frischwasserventils 28 mit Frischwasser FW befüllt werden. Das Wasser W wird als Spülwasser S mittels der Heizpumpe 16 für eine vorgegebene Zeit umgewälzt, wobei im Regelfall ein Zuschalten der Heizeinrichtung 16 der Umwälzpumpe 16 unterbleiben kann. Danach wird das nunmehr verschmutzte Wasser mittels der Laugenpumpe 19 in einer weiteren Abpumpsequenz APS als Abwasser nach außen abgepumpt.

Der nun nachfolgende Klarspülschritt KS dient insbesondere der Vermeidung von Flecken auf dem Spülgut, welche durch gelöste Stoffe im Wasser W, wie beispielsweise Salz und/oder Kalk, entstehen könnten. Hierzu wird das Wasser W während des Klarspülschritts KS mit Klarspüler versetzt. Bei einer Geschirrspülmaschine 1 mit einer sogenannten Eigenwärmetrocknung besteht eine weitere Aufgabe des Klarspülschritts KS darin, den nachfolgenden Trocknungsschritt TS vorzubereiten. Dabei wird das Spülgut während des Klarspülschritts KS auf eine hohe Temperatur aufgeheizt. Im abschließenden Trocknungsschritt TS verdunsten am heißen Spülgut anhaftende Wassertropfen und schlagen sich an der Innenseite des Spülbehälters 4 aufgrund der dort gegenüber der Temperatur der Luft herrschenden niedrigeren Temperatur ab. Zu Beginn des Klarspülschritts KS wird zunächst das Ablaufventil 13 geöffnet, so dass im vorausgehenden Zwischenspülschritt ZS, insbesondere am Ende des Zwischenspülschritts, über das geöffnete Frischwasserventil 28 in den Wasserbehälter 12 eingelassenes, dort bei geschlossenem Ablaufventil 13 bevorratetes Wasser W aus dem Wasserbehälter 12 über den Wassereinlass 14 in die Spülkammer 4 gelangt. Diese im Wasserbehälter 12 gespeicherte Frischwassermenge kann zur Beschickung der Spülkammer 4 mit einer geforderten Wassermenge für den Klarspülschritt KS ggf. ausreichen. Wenn der Wasserbehälter 12 unbefüllt ist, oder die in ihm gespeicherte Wassermenge nicht für die Durchführung des Klarspülschritts KS ausreicht, wird das Frischwasserventil 28 geöffnet und Frischwasser aus der Frischwasserversorgungseinrichtung 11 durch den Wasserbehälter 12 bei geöffnetem Ablaufventil 13 direkt hindurchlaufend in die Spülkammer 4 eingelassen. Wenn die Spülkammer 4 mit einer für den Klarspülschritt KS ausreichenden Menge von Wasser W aus dem Wasserbehälter 12 beschickt ist, wird das Ablaufventil 13 wieder geschlossen. Der Wasserbehälter 12 kann nun erneut durch Öffnen des Frischwasserventils 28 mit Frischwasser FW befüllt werden. Das Wasser W wird nun als Spülwasser S mittels der Heizpumpe 16 für eine vorgegebene Zeit umgewälzt, wobei im Regelfall ein Zuschalten der Heizeinrichtung 16 der Heizpumpe 16 erforderlich ist. Zum Ende des Klarspülschritts KS wird das nunmehr verschmutzte Wasser in einer weiteren Abpumpsequenz APS als Abwasser nach außen abgepumpt.

Da die Abflussrohrleitung 20 durch den Wasserbehälter 12 hindurch geführt ist, entzieht das etwaig im Wasserbehälter 12 für eine spätere Verwendung bevorratete Wasser W dem abgepumpten Abwasser AW während jeder der Abpumpsequenzen APS Wärmeenergie, so dass grundsätzlich weniger Energie für die Erwärmung des Wassers W, insbesondere bei Verwendung in einem der beheizten Programmschritte aufgebracht werden muss.

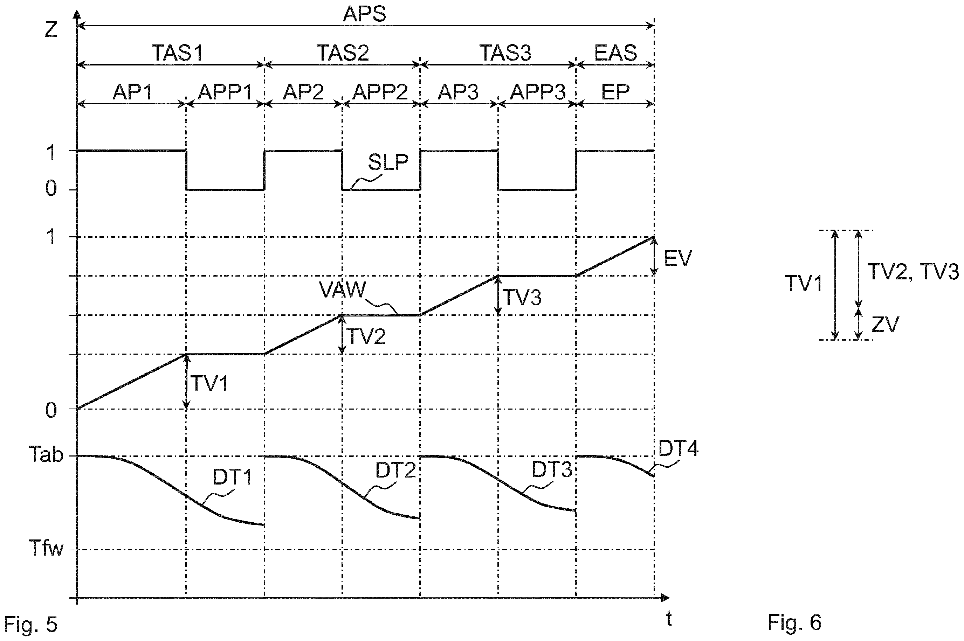

Figur 5 zeigt stellvertretend für die in Figur 4 jeweils für das Vorspülen, Reinigen, Zwischenspülen und Klarspülen dargestellte Abpumpsequenz APS, die jeweils während eines Endabschnitts des Vorspülschritts VS, des Reinigungsschritts RS, Zwischenspülschritts ZS sowie Klarspülschritts KS des Geschirrspülprogramms gestartet und durchgeführt wird, eine Detaildarstellung. Die beispielhaft dargestellte Abpumpsequenz APS umfasst beispielhaft drei aufeinanderfolgende Teilabpumpsequenzen TAS1, TAS2 und TAS3 sowie eine Endabpumpsequenz EAS. Dabei umfasst die erste Teilabpumpsequenz TAS1 einen Abpumpschritt AP1 und einen diesem unmittelbar nachfolgenden Abpumppausenschritt APP1, die zweite Teilabpumpsequenz TAS2 einen Abpumpschritt AP2 und einen diesem unmittelbar nachfolgenden Abpumppausenschritt APP2 und die dritte Teilabpumpsequenz TAS3 ebenfalls einen Abpumpschritt AP3 und einen diesem unmittelbar nachfolgenden Abpumppausenschritt APP3.

Die optionale Endabpumpsequenz EAS umfasst lediglich einen Endabpumpschritt EP, d.h. keinen Abpumppausenschritt.

Dabei zeigt, wie in Figur 4, die Kurve SLP den Schaltzustand der Abwasserpumpe 19 der Geschirrspülmaschine 1. Der Schaltzustand "0" entspricht dabei einer abgeschalteten Abwasserpumpe 19, der Schaltzustand "1" einer eingeschalteten Abwasserpumpe 19.

Ebenso wie in Figur 4 symbolisiert die Kurve VAW das Volumen des abgepumpten Abwassers AW eines Programmschritts VS, RS, ZS, KS in einer relativen Darstellung. Der Zustand "0" bedeutet dabei, dass noch kein Abwasser abgepumpt ist, und der Zustand "1", dass das Abwasser AW eines Programmschritts VS, RS, ZS, KS vollständig abgepumpt ist.

Während der ersten Teilabpumpsequenz TAS1 wird die Laugenpumpe 19 während des Abpumpschritts AP1 eingeschaltet, und zwar solange, bis ein gewünschtes Teilvolumen TV1 des abzupumpenden Abwassers AW abgepumpt ist. Die durchschnittliche Temperatur DT1 des Teilvolumens TV1 des abzupumpenden Abwassers AW fällt dabei, ausgehend von einer anfänglichen Temperatur Tab des Abwassers AW, ab, weil von diesem Wärmeenergie auf das jeweilig im Wasserbehälter 12 bevorratete Wasser W übertragen wird, wenn die anfängliche Temperatur Tfw des im Wasserbehälter 12 bevorrateten Wassers W geringer als die anfängliche Temperatur Tab des Abwassers ist. Nun folgt der Abpumppausenschritt APP1, während die Laugenpumpe 19 ausgeschaltet ist. Die durchschnittliche Temperatur DT1 des Teilvolumens TV1 des abzupumpenden Abwassers AW fällt dabei aufgrund der durch den zusätzlichen Abpumppausenabschnitt APP1 verlängerten Verweildauer im Abflusrohrleitungabschnitt 20b, der im Wasserbehälter 12 angeordnet ist, weiter ab, so dass eine zusätzliche Wärmeenergie auf das im Wasserbehälter 12 bevorratete Wasser W übertragen wird. Hierdurch ergibt sich im Vergleich zu Lösungen, bei denen das Abwasser AW kontinuierlich ohne Pausen abgepumpt wird, eine Erhöhung der übertragenen Wärmeenergie.

Während der folgenden Teilabpumpsequenz TAS2 wird die Laugenpumpe 19 während des Abpumpschritts AP2 solange eingeschaltet, bis ein gewünschtes Teilvolumen TV2 des abzupumpenden Abwassers AW abgepumpt ist. Die durchschnittliche Temperatur DT2 des Teilvolumens TV2 des abzupumpenden Abwassers AW fällt dabei, ausgehend von einer anfänglichen Temperatur Tab des Abwassers AW, ab, weil von diesem weiter Wärmeenergie auf das im Wasserbehälter 12 bevorratete Wasser W übertragen wird, wenn die aktuelle Temperatur Tfw des im Wasserbehälter 12 bevorrateten Wassers W nach wie vor geringer als die aktuelle Temperatur Tab des Abwassers ist. Nun folgt der Abpumppausenschritt APP2 nach, während dem die Laugenpumpe 19 erneut ausgeschaltet ist. Durch das Ausschalten der Laugenpumpe 19 bleibt das Teilvolumen TV2 im im Wasserbehälter 12 liegenden Abschnitt 20b der Abflussrohrleitung 20 stehen. Die durchschnittliche Temperatur DT2 des Teilvolumens TV2 des abzupumpenden Abwassers AW fällt dabei weiter ab, weil eine zusätzliche Wärmeenergie auf das im Wasserbehälter 12 bevorratete Wasser W übertragen wird. Hierdurch ergibt sich im Vergleich zum Stand der Technik eine weitere Erhöhung der übertragenen Wärmeenergie.

In der nun folgenden Teilabpumpsequenz TAS3 wird die Laugenpumpe 19 während des Abpumpschritts AP3 erneut solange eingeschaltet, bis ein gewünschtes Teilvolumen TV3 des abzupumpenden Abwassers AW abgepumpt ist. Die durchschnittliche Temperatur DT3 des Teilvolumens TV3 des abzupumpenden Abwassers AW fällt dabei, ausgehend von einer anfänglichen Temperatur Tab des Abwassers AW, erneut ab, weil von diesem weiter Wärmeenergie auf das im Wasserbehälter 12 bevorratete Wasser W übertragen wird, wenn die aktuelle Temperatur Tfw des im Wasserbehälter 12 bevorrateten Wassers W weiterhin geringer als die Temperatur Tab des Abwassers ist. Nun folgt der Abpumppausenschritt APP3, während die Laugenpumpe 19 erneut ausgeschaltet ist. Durch das Ausschalten der Laugenpumpe 19 bleibt das Teilvolumen TV2 im im Wasserbehälter 12 liegenden Abschnitt 20b der Abflussrohrleitung 20 stehen. Die durchschnittliche Temperatur DT3 des Teilvolumens TV3 des abzupumpenden Abwassers AW fällt dabei weiter ab, weil eine zusätzliche Wärmeenergie auf das im Wasserbehälter 12 bevorratete Wasser W übertragen wird. Hierdurch ergibt sich im Vergleich zum Stand der Technik eine weitere Erhöhung der übertragenen Wärmeenergie.

In der nun folgenden optionalen Endabpumpsequenz EAS wird die Laugenpumpe 19 während des Endabpumpschritt EP erneut eingeschaltet, solange, bis das Endvolumen EV des abzupumpenden Abwassers AW abgepumpt ist. Die durchschnittliche Temperatur DT4 des Endvolumens EV des abzupumpenden Abwassers AW fällt dabei, ausgehend von der aktuellen Temperatur Tab des Abwassers AW, erneut ab, weil weiter Wärmeenergie auf das im Wasserbehälter 12 bevorratete Wasser W übertragen wird.

Die Übertragung von Wärme erfolgt damit bei der erfindungsgemäßen Geschirrspülmaschine 1 nicht nur während der Abpumpschritte AP1, AP2, AP3, EP, sondern auch in den Abpumppausen APP1, APP2, APP3.

Auf diese Weise kann dem Abwasser AW wesentlich mehr Wärmeenergie entzogen werden, als dies bei einem kontinuierlichen Abpumpen des Gesamtvolumens des Abwassers AW möglich wäre. Hierdurch kann das bevorratete Wasser W beim Abpumpen auf eine deutlich höhere Temperatur gebracht werden, so dass nach dem Einbringen des bevorrateten Wassers W in den Spülbehälter dort der Energiebedarf zum Beheizen des Wassers W auf eine gewünschte Endtemperatur deutlich sinken kann.

Bevorzugt ist das Spülprogramm SP so ausgebildet, dass das jeweilige Teilvolumen TV1, TV2, TV3 des Abwassers, welches während einer der Teilabpumpsequenzen TAS1, TAS2, TAS3 abgepumpt ist, wenigstens 70 %, bevorzugt wenigstens 80 %, besonders bevorzugt wenigstens 90 %, und/oder höchstens 130 %, bevorzugt höchstens 120 %, besonders bevorzugt höchstens 110 %, eines Innenvolumens eines im Wasserbehälter 12 angeordneten Abschnitts 20b der Abflussrohrleitung 20 beträgt. Das Innenvolumen des im Wasserbehälter 12 angeordneten Abschnitts 20b der Abflussrohrleitung 20 ist dabei jenes Volumen, welches das Abwasser AW in jenem Abschnitt 20b der Abwasserrohrleitung 20 einnehmen kann, der sich vom Eintritt der Abwasserrohrleitung 20 in den Wasserbehälter bis zum Austritt der Abwasserrohrleitung 20 aus dem Wasserbehälter 12 erstreckt. Idealerweise kann dem Abwasser AW genau dann die meiste Wärmeenergie entzogen werden, wenn in jeder der Teilabpumpsequenzen TAS1, TAS2, TAS3 das Innenvolumen des im Wasserbehälter 12 angeordneten Abschnitts 20b der Abflussrohrleitung 20 mit neuem Abwasser AW gefüllt wird. Durch die Verwendung der angegebenen Mindestwerte und Maximalwerte für die Teilvolumina TV1, TV2, TV3 kann dieses Ziel zumindest annähernd erreicht werden.

Bevorzugt ist der Laugenpumpe 19 eine Leistungserkennungseinrichtung 27 zugeordnet, welche mit der Steuereinrichtung 8 zur Übertragung von Leistungsmesswerten verbunden ist, wobei die Steuereinrichtung 8 zur Steuerung des Teilvolumens TV1, TV2, TV3 des Abwassers AW, welches während einer der Teilabpumpsequenzen TAS1, TAS2, TAS3 abgepumpt ist, anhand der Leistungsmesswerte ausgebildet ist. Die Förderleistung der Laugenpumpe 19 korrespondiert mit der Fördergeschwindigkeit der Laugenpumpe 19, so dass aus der abgelaufenen Zeit und der Leistung das abgepumpte Volumen ermittelt werden kann. Die Leistungserkennungseinrichtung 27 kann zur Ermittlung der Leistung der Laugenpumpe 19 deren elektrische Leistungsaufnahme, beispielsweise durch Strom- und/oder Spannungsmessung, erfassen. Auf diese Weise kann das jeweils abzupumpende Teilvolumen TV1, TV2, TV3 exakt eingehalten werden, ohne dass es hierzu eines separaten Sensors, beispielsweise eines Durchflussmengensensors, wie etwa einem Flügelradsensor, bedarf. Hierdurch kann die Wärmeübertragung weiter optimiert werden und der bauliche Aufwand bei der erfindungsgemäßen Geschirrspülmaschine 1 gering gehalten werden.

Bevorzugt ist das Spülprogramm SP so ausgebildet, dass eine Dauer jeweils eines der Abpumppausenschritte APP1, APP2, APP3 anhand einer Temperatur Tfw des jeweilig bevorrateten Wassers W und/oder anhand einer Temperatur Tab des abzupumpenden Abwassers AW gesteuert ist. Dem liegt die Überlegung zu Grunde, dass die optimale Dauer der Abpumppausenschritte APP1, APP2, APP3 unter anderem von der Temperaturdifferenz zwischen der Temperatur Tfw des bevorrateten Wassers W und der Temperatur Tab des Abwassers AW abhängig ist. Dabei gilt: Je größer die Temperaturdifferenz ist, desto länger kann die optimale Dauer sein.

Prinzipiell ist es möglich, einen Sensor zur Messung der Temperatur Tfw des bevorrateten Wassers W vorzusehen, der mit der Steuereinrichtung 8 zur Übermittlung von entsprechenden Messwerten verbunden ist. Sofern es sich bei dem bevorrateten Wasser W um Frischwasser FW handelt, kann es jedoch in vielen Fällen ausreichend sein, die am Betriebsort vorhandene Temperatur Tfw des Frischwassers FW, beispielsweise über eine Bedieneinrichtung 6 in der Steuereinrichtung 8 zu hinterlegen, da sich typischerweise die Temperatur Tfw des Frischwassers FW im Zeitverlauf nur wenig ändert. Ebenso ist es möglich, einen Sensor zur Messung der Temperatur Tab des Abwassers AW vorzusehen, der mit der Steuereinrichtung 8 zur Übermittlung von entsprechenden Messwerten verbunden ist. Ein solcher Sensor steht in vielen Fällen ohnehin zur Verfügung, um eine Heizeinrichtung 16 der Geschirrspülmaschine 1 zielgerichtet steuern zu können.

Vorteilhafterweise ist das Spülprogramm SP so ausgebildet, dass die Abpumpsequenz APS am Ende wenigstens eines unbeheizten wasserführenden Programmschritts VS, ZS und/oder am Ende wenigstens eines beheizten wasserführenden Programmschritts RS, KS durchgeführt ist. Sofern die Abpumpsequenz APS am Ende eines beheizten wasserführenden Programmschritts wie z.B. RS, KS, beispielsweise eines Reinigungsschritts RS oder eines Klarspülschritts KS, durchgeführt ist, können besonders große Wärmemengen zurückgewonnen werden. Daher ist es bevorzugt, die Abpumpsequenz APS am Ende eines jeden beheizten wasserführenden Programmschritts wie z.B. RS, KS eines Spülprogramms vorzusehen. Aber auch die Durchführung der Abpumpsequenz APS am Ende wenigstens eines unbeheizten wasserführenden Programmschritts VS, ZS kann sinnvoll sein, da die Temperatur Tab des Abwassers AW am Ende eines unbeheizten wasserführenden Programmschritts VS, ZS in vielen Fällen über der Temperatur Tfw des bevorrateten Wassers W liegt. Daher kann es ggf. auch vorteilhaft sein, die Abpumpsequenz APS am Ende eines jeden unbeheizten wasserführenden Programmschritts VS, ZS eines Spülprogramms SP vorzusehen.

Figur 6 zeigt eine Darstellung der abzupumpenden Teilvolumina TV1, TV2 und TV3 während der jeweiligen Abpumpsequenz APS. Vorteilhafterweise ist das Spülprogramm SP so ausgebildet, dass das Teilvolumen TV1 des Abwassers AW, welches während der ersten Teilabpumpsequenz TAS1 der Teilabpumpsequenzen TAS1, TAS2, TAS3 abgepumpt ist, gegenüber den Teilvolumina TV2, TV3 der folgenden Teilabpumpsequenzen TAS2, TAS3 um ein Zusatzvolumen ZV erhöht ist, welches wenigstens 70 %, bevorzugt wenigstens 80 %, besonders bevorzugt wenigstens 90 %, und/oder höchstens 130 %, bevorzugt höchstens 120 %, besonders bevorzugt höchstens 110 %, eines Innenvolumens eines zwischen der Laugenpumpe 19 und dem Wasserbehälter 12 angeordneten Abschnitts 20a der Abflussrohrleitung 20 beträgt. Das Innenvolumen eines zwischen der Laugenpumpe 19 und dem Wasserbehälter 12 angeordneten Abschnitts 20a der Abflussrohrleitung 20 ist dabei jenes Volumen, welches das Abwasser AW in jenem Abschnitt 20a der Abwasserrohrleitung 20 einnehmen kann, der sich von der Laugenpumpe 19 bis zum Eintritt der Abwasserrohrleitung 20 in den Wasserbehälter 12 erstreckt. Idealerweise kann dem Abwasser AW in der ersten Teilabpumpsequenz TAS1 genau dann die meiste Wärmeenergie entzogen werden, wenn solange gepumpt wird, bis das in der Regel kalte Abwasser AW, welches sich zu Beginn der ersten Teilabpumpsequenz TAS1 in demjenigen Abschnitt 20a der Abflussrohrleitung 20, der sich zwischen der Laugenpumpe 19 und dem Wasserbehälter 12 befindet, durch den im Wasserbehälter 12 angeordneten Abschnitt 20b der Abflussrohrleitung 20 hindurchgepumpt wird, d.h. aus diesem herausgedrückt wird, so dass der im Wasserbehälter 12 angeordnete Abschnitt 20b der Abflussrohrleitung 20 vollständig mit warmem Abwasser AW aus dem Spülbehälter 2 gefüllt wird. Durch die Verwendung der angegebenen Mindestwerte und Maximalwerte für das Zusatzvolumen ZV kann dieses Ziel zumindest annähernd erreicht werden.

Zusammenfassend betrachtet ist der Abpumpprozess vorteilhafterweise so zu gestalten, dass das Abwasser AW taktweise (mit dazwischenliegenden Totzeiten) in kleinen Mengen durch den Abwasserkanalabschnitt wie z.B. 20b, der durch das im Tank bzw. Wasserbehälter wie z.B. 12 bevorratete Wasser W verläuft, geschickt wird. Dabei kann es insbesondere vorteilhaft sein, wenn nur soviel Abwasservolumen wie z.B. TV1, TV2, TV3 aus dem Spülbehälter 2 in einem Teilabpumpvorgang bzw. Abpumpschritt wie z.B. AP1, AP2, AP3 aus der Spülkammer gefördert wird, welches auch in das Volumen passt, das der Abwasserkanalabschnitt im Tank bzw. Wasserbehälter aufweist. Die Abpumpmenge wie z.B. TV1, TV2, TV3 des jeweiligen Abpumpschritts kann vorzugsweise durch die Leistungserkennungseinrichtung der Laugenpumpe wie z.B. 19 und deren Fördervolumen reguliert, d.h. eingestellt werden.

Die Verweilzeitdauer der jeweiligen Abwasserteilmenge im Abwasserkanalabschnitt, der durch den Wasserbehälter führt, wird durch jeweils einen an den jeweiligen Abpumpschritt wie z.B. AP1, AP2, AP3 angehängten, d.h. zusätzlich eingefügten Abpumppausenabschnitt wie z.B. APP1, APP2, APP3 verlängert. Die Verweilzeitdauer der Abwasserteilmenge im Abwasserkanalabschnitt, der durch den Wasserbehälter führt, wird während des jeweiligen Abpumppausenschritts wie z.B. APP1, APP2, APP3, der dem jeweiligen Abpumpschritt wie z. B. AP1, AP2, AP3 nachfolgend zugeordnet ist, zweckmäßigerweise so gewählt, dass eine maximale Wärmeenergie an das Wasser W im Tank innerhalb einer vorgegebenen Programmgesamtlaufzeit übertragen werden kann. Die jeweilige Verweilzeitdauer kann insbesondere von der jeweilig im Abwasser vorherrschenden Temperatur wie z.B. Tab und der sich daraus bildenden Temperaturdifferenz zur Temperatur wie z.B. Tfw des bevorrateten Wasser W im Tank abhängig sein.

Beim Stand der Technik wird das Wasser in nur einem einzigen kontinuierlichen Vorgang aus dem Spülbehälter abgepumpt. Dabei ist eine Wärmeenergieübertragung nur zu einem zu geringen Teil als gewünscht möglich. Demgegenüber wird bei der Erfindung durch die kleinen getakteten Abpumpmengen wie z.B. TV1, TV2, TV3 und der spezifisch gewählten Verweilzeitdauern der Abpumppausenschritte wie z.B. APP1, APP2, APP3, die den Abpumpschritten wie z.B. AP1, AP2, AP3 jeweils nachgeordnet sind, pro Abpumpmenge, d.h. Abwasserteilmenge wie z.B. TV1, TV2, TV3 eine höhere Wärmeenergie als bisher bei einem einzigen, kontinuierlich, d.h. ohne Abpumppause durchgeführten Abpumpvorgang an das im Tank wie z.B. 12 bevorratete Wasser W abgegeben.

Es ergeben sich bei der jeweiligen Abpumpsequenz wie z.B. APS durch die getaktete Abfolge von Abpumpschritten und dazwischenliegenden Pausen bzw. Totzeiten der jeweiligen Abpumpsequenz somit insbesondere folgende Vorteile:
Mit einem Abwasserkanal wie z.B. 20 durch einen mit Wasser W bevorrateten Tank bzw. Wasserbehälter wie z.B. 12 kann verbessert Wärmeenergie aus dem Abwasser AW zurückgewonnen werden, bevor es verworfen wird. Dabei kann durch den optimierten Abpumprozess wie z.B. APS insbesondere die maximal mögliche Wärmeenergie aus dem Abwasser AW in das im Tank wie z.B. 12 bevorratete Wasser W übertragen werden. Hierbei kann im Idealfall die gesamte Wärmeenergie im Abwasser AW auf das bevorratete Wasser W im Tank übertragen werden, was durch die vorherrschende Temperaturdifferenz zwischen dem Abwasser AW und dem bevorrateten Wasser W möglich ist. Dieses Wasser W kann dann in einem der folgenden Teilprogrammabschnitte VS, RS, ZS, KS verwendet werden. Vorteilhaft ist diese Verwendung insbesondere in einem Programmteilabschnitt wie z.B. im Reinigungsgang RS und/oder im Klarspülgang KS, welcher jeweils ein Heizbad vorsieht, da in diesem Programmteilabschnitt wie z.B. RS, KS mit aufzuheizender Flüssigkeit dann wegen der Vorerwärmung durch den Wärmeenergietransfer vom Abwasser deutlich weniger Heizenergie bis zum Erreichen einer gewünschten, insbesondere definierten Endtemperatur nötig ist. Denn die Anfangstemperatur in diesem Bad liegt durch das mittels des oben erläuterten erfindungsgemäßen Wärmeenergietransfers vorgewärmte Wasser W schon höher als die Anfangstemperatur des in den Wasserbehälter bzw. Tank wie z.B. 12 eingelassenen Frischwassers FW. Aber auch die Verwendung dieses Wärmeenergietransfers in einem nicht beheizten Spülprogrammabschnitt wie z.B. VS, ZS kann ggf. vorteilhaft sein, da auch hier das Spülbad auf ein höheres Temperaturniveau durch den erfindungsgemäßen Wärmeenergietransfer gebracht werden kann und somit die folgenden Spülprogrammabschnitte ein höheres Temperaturniveau übernehmen.

Verallgemeinert betrachtet wird eine im Spülbehälter und/oder im Flüssigkeitssystem, insbesondere Flüssigkeitsumwälzkreislauf, der Geschirrspülmaschine vorhandene erwärmte sowie insbesondere bereits benutzte Gesamtflüssigkeitsmenge nicht während nur einer einzigen, kontinuierlichen Abpumpphase aus dem Spülbehälter und/oder dem Flüssigkeitssystem mittels einer Abwasserpumpe abgepumpt, sondern es werden Teilmengen der vorhandenen Gesamtflüssigkeitsmenge während mehrerer Teilabpumpschritte, die durch vorgegebene Wartezeiten bzw. Unterbrechungszeitdauern von Abpumppausenschritten voneinander getrennt sind, schrittweise aus der Geschirrspülmaschine entfernt. Es wird also jeweils nur eine Teilmenge der Gesamtflüssigkeitsmenge des im Spülbehälter oder verallgemeinert ausgedrückt im Flüssigkeitssystem vorhandenen Abwassers in den durch den im Wasserbehälter angeordneten Abflussrohrleitungsabschnitt gepumpt, dann der Abpumpvorgang unterbrochen oder so reduziert, dass diese Teilmenge für eine vorgebbare Wartezeit bzw. Abpumppause in diesem Abflussrohrleitungsabschnitt für einen ausreichenden Wärmeenergietransfer auf das im Wasserbehälter bevorratete Wasser verweilt, insbesondere stehenbleibt, und erst danach die nächste Teilmenge an Abwasser aus dem Spülbehälter oder verallgemeinert Flüssigkeitssystem in den im Wasserbehälter angeordneten Abflussrohrleitungsabschnitt gepumpt. Auf diese Weise werden Teilmengen des im Spülbehälter oder Flüssigkeitssystem vorhandenen Abwassers zeitlich nacheinander mit vorgegebenen Abpumppausen voneinander beabstandet in den durch den im Wasserbehälter angeordneten Abflussrohrleitungsabschnitt gepumpt. Zum Flüssigkeitssystem zählen im Rahmen der Erfindung insbesondere der Pumpentopf, die ein oder mehreren Zuführleitungen zu den ein oder mehreren Sprüheinrichtungen, bevorzugt rotierbaren Sprüharmen, und /oder die Leitungen vom Pumpentopf zur Umwälzpumpe und/oder Laugenpumpe, die Umwälzpumpe, die Laugenpumpe, sowie sonstige flüssigkeitsführende Komponenten für den Sprühbetrieb der Geschirrspülmaschine. Zwischen je zwei zeitlich aufeinanderfolgenden Abpumpschritten ist eine vorzugsweise definierte Wartezeit bzw. Verweilzeitdauer vorteilhaft derart eingefügt, dass während dieser das Gefälle, d.h. die Differenz zwischen der Temperatur des jeweiligen Abwasser- Teilvolumens, das in den jeweilig im Wasserbehälter angeordneten Abschnitt der Abflussrohrleitung gepumpt worden ist und dort verweilt, und der Temperatur des im Wasserbehälter bevorrateten, noch zu erwärmenden Wassers, für einen ausreichenden Wärmeenergietransfer noch groß genug ist. Die Wartezeit ist insbesondere maximal derart gewählt, dass sie der Zeitdauer entspricht, bis sich die Temperatur des Abwassers im Abschnitt der Abflussrohrleitung, der durch den Wasserbehälter geführt ist, und die Temperatur des bevorrateten Wassers im Wasserbehälter weitgehend aneinander angepasst haben.

Es wird anders ausgedrückt also ein stoßweises bzw. "schluckweises" Intervallabpumpen mit jeweils einer Stillstandsphase der Abwasserpumpe zwischen je zwei aufeinanderfolgenden Abpumpschritten durchgeführt, was zu einem gegenüber einem kontinuierlichen, einzigen Abpumpvorgang verzögerten Abpumpen führt. Die jeweilige Stillstandsphase der Abwasserpumpe kann dabei durch ein Ausschalten der Pumpe bewirkt sein. Alternativ kann sie auch dadurch bewirkt sein, dass die Abwasserpumpe mit einer gegenüber dem jeweiligen Abpumpschritt so verringerten Drehzahl betrieben wird, dass im Wesentliche kein oder kaum, d.h. nur wenig Abwasser aus dem im Wasserbehälter bzw. Tank liegenden Abschnitt der Abwasserrohrleitung herausbefördert wird, d.h. es bleibt ein Großteil der in diesem Abflussrohrleitungsabschnitt vorhandenen Teilmenge an Abwasser für eine vorgegebene Verweilzeitdauer in diesem Abflussrohrleitungsabschnitt stehen.

Ggf. kann der Tank auch durch einen sogenannten Flottenspeicher gebildet sein, in dem in mindestens einem Teilspülgang oder Spülgang benutzte Spülflottenflüssigkeit zwischengespeichert und für zumindest einen nachfolgenden Teilspülgang oder Spülgang wieder verwendet wird. In diesem Fall hat der Tank zweckmäßigerweise keinen Anschluss zu einer Frischwasserversorgungsleitung, sondern steht nur mit dem Flüssigkeitssystem, insbesondere dem Spülbehälter der Geschirrspülmaschine in flüssigkeitsleitender Verbindung. In diese kann zweckmäßigerweise ein Ventil eingefügt sein, das mit der Steuereinrichtung je nach Bedarf öffen- sowie schließbar ist. Durch diesen Flottenspeicher kann in analoger Weise wie beim Frischwassertank 12 der Figuren 1 - 6 eine Abwasserrohrleitung hindurchgeführt sein und der jeweilige Abpumpvorgang entsprechend "zeitlich gestückelt" nach dem oben erläuterten erfindungsgemäßen Prinzip durchgeführt werden.

### Bezugszeichenliste

- 1: Geschirrspülmaschine
- 2: Spülbehälter
- 3: Tür
- 4: Spülkammer
- 5: Gehäuse
- 6: Bedieneinrichtung
- 7: Anzeigeeinrichtung
- 8: Steuereinrichtung
- 9: unterer Geschirrkorb
- 10: oberer Geschirrkorb
- 11: Wasserversorgungseinrichtung
- 12: Wasserbehälter
- 13: Ablaufventil
- 14: Wassereinlass
- 15: Sammelbehälter
- 16: Heizpumpe
- 17: oberer Sprüharm
- 18: unterer Sprüharm
- 19: Laugenpumpe
- 20: Abflussrohrleitung
- 21: Abwasserentsorgungseinrichtung
- 22: Öffnung
- 23: Öffnung
- 24: Clipse
- 25: Seitenwand
- 26: Boden
- 27: Leistungserkennungseinrichtung
- 28: Frischwasserventil

- FW: Frischwasser
- S: Spülwasser
- AW: Abwasser
- W: Wasser
- SP: Spülprogramm
- VS: Vorspülschritt
- RS: Reinigungsschritt
- ZS: Zwischenspülschritt
- KS: Klarspülschritt
- TS: Trocknungsschritt
- SZV: Schaltzustand des Ablaufventils
- SZU: Schaltzustand der Umwälzpumpe der Heizpumpe
- SZH: Schaltzustand der Heizeinrichtung der Heizpumpe
- SLP: Schaltzustand der Laugenpumpe
- VAW: Volumen des abgepumpten Abwassers eines Programmschritts
- APS: Abpumpsequenz

- TAS: Teilabpumpsequenz
- EAS: Endabpumpsequenz
- AP1, AP2, AP3: Abpumpschritt
- APP1, APP2, APP3: Abpumppausenschritt
- EP: Endabpumpschritt
- TV: Teilvolumen
- EV: Endvolumen
- DT: Durchschnittstemperatur des Teilvolumens des Abwassers
- Tab: Temperatur des Abwassers
- Tfw: Temperatur des bevorrateten Wassers

- ZV: Zusatzvolumen

## Patentansprüche

1. Geschirrspülmaschine, insbesondere Haushaltsgeschirrspülmaschine (1), mit einer Steuereinrichtung (8) zur Steuerung eines Spülgangs zum Reinigen von Spülgut anhand wenigstens eines in der Steuereinrichtung (8) hinterlegten Spülprogramms (SP), mit einem Spülbehälter (2) zur Aufnahme des Spülguts, mit einem Wasserbehälter (12) zum Bevorraten von Wasser (W), insbesondere von Frischwasser (FW), und mit einer durch die Steuereinrichtung (8) steuerbaren Laugenpumpe (19) zum Abpumpen von Abwasser (AW) aus dem Spülbehälter (2) über eine Abflussrohrleitung (20), die durch den Wasserbehälter (12) hindurchgeführt ist, **dadurch gekennzeichnet, dass** das Spülprogramm (SP) so ausgebildet ist, dass das Abwasser (AW) wenigstens einmal mittels einer Abpumpsequenz (APS) abgepumpt ist, welche wenigstens eine Teilabpumpsequenz (TAS1, TAS2, TAS3) umfasst, die jeweils einen Abpumpschritt (AP1, AP2, AP3) zum Abpumpen eines Teilvolumens (TV1, TV2, TV3) des Abwassers (AW) und einen darauffolgenden Abpumppausenschritt (APP1, APP2, APP3) zum Übertragen von Wärmeenergie von dem Teilvolumen (TV1, TV2, TV3) des Abwassers (AW) auf das bevorratete Wasser (W) aufweist.

2. Geschirrspülmaschine nach dem vorstehenden Anspruch, **dadurch gekennzeichnet, dass** das Spülprogramm (SP) so ausgebildet ist, dass das Teilvolumen (TV1, TV2, TV3) des Abwassers (AW), welches während einer der Teilabpumpsequenzen (TAS1, TAS2, TAS3) abgepumpt ist, wenigstens 70 %, bevorzugt wenigstens 80 %, besonders bevorzugt wenigstens 90 %, und/oder höchstens 130 %, bevorzugt höchstens 120 %, besonders bevorzugt höchstens 110 %, eines Innenvolumens eines im Wasserbehälter (12) angeordneten Abschnitts (20b) der Abflussrohrleitung (20) beträgt, wobei das Innenvolumen jenes Volumen ist, welches das Abwasser (AW) in jenem Abschnitt der Abflussrohrleitung (20) einnehmen kann, der sich vom Eintritt der Abflussrohrleitung (20) in den Wasserbehälter (12) bis zum Austritt der Abflussrohrleitung (20) aus dem Wasserbehälter (12) erstreckt.

3. Geschirrspülmaschine nach einem der vorstehenden Ansprüche, **dadurch gekennzeichnet, dass** das Spülprogramm (SP) so ausgebildet ist, dass das Teilvolumen (TV1) des Abwassers (AW), welches während der ersten Teilabpumpsequenz (TAS1) der Teilabpumpsequenzen (TAS1, TAS2, TAS3) abgepumpt ist, gegenüber dem Teilvolumen (TV2, TV3) der folgenden Teilabpumpsequenzen (TAS2, TAS3) um ein Zusatzvolumen (ZV) erhöht ist, welches wenigstens 70 %, bevorzugt wenigstens 80 %, besonders bevorzugt wenigstens 90 %, und/oder höchstens 130 %, bevorzugt höchstens 120 %, besonders bevorzugt höchstens 110 %, eines Innenvolumens eines zwischen der Laugenpumpe (19) und dem Wasserbehälter (12) angeordneten Abschnitts (20a) der Abflussrohrleitung (20) beträgt, wobei das Innenvolumen jenes Volumen ist, welches das Abwasser (AW) in jenem Abschnitt der Abflussrohrleitung (20) einnehmen kann, der sich von der Laugenpumpe (19) bis zum Eintritt der Abflussrohrleitung (20) in den Wasserbehälter (12) erstreckt.

4. Geschirrspülmaschine nach einem der vorstehenden Ansprüche, **dadurch gekennzeichnet, dass** der Laugenpumpe (19) eine Leistungserkennungseinrichtung (27) zugeordnet ist, welche mit der Steuereinrichtung (8) zur Übertragung von Leistungsmesswerten verbunden ist, wobei die Steuereinrichtung (8) zur Steuerung des Teilvolumens (TV1, TV2, TV3) des Abwassers (AW), welches während einer der Teilabpumpsequenzen (TAS1, TAS2, TAS3) abgepumpt ist, anhand der Leistungsmesswerte ausgebildet ist.

5. Geschirrspülmaschine nach einem der vorstehenden Ansprüche, **dadurch gekennzeichnet, dass** das Spülprogramm (SP) so ausgebildet ist, dass eine Dauer jeweils eines der Abpumppausenschritte (APP1, APP2, APP3) anhand einer Temperatur des bevorrateten Wassers (W) und/oder anhand einer Temperatur des abzupumpenden Abwassers (AW) gesteuert ist.

6. Geschirrspülmaschine nach einem der vorstehenden Ansprüche, **dadurch gekennzeichnet, dass** das Spülprogramm (SP) so ausgebildet ist, dass die Abpumpsequenz (APS) am Ende wenigstens eines unbeheizten wasserführenden Programmschritts (VS, ZS) und/oder am Ende wenigstens eines beheizten wasserführenden Programmschritts (RS, KS) durchgeführt ist.

7. Geschirrspülmaschine nach einem der vorstehenden Ansprüche, **dadurch gekennzeichnet, dass** die Abflussrohrleitung (20) als Abflussschlauch (20) ausgebildet ist.

8. Geschirrspülmaschine nach einem der vorstehenden Ansprüche, **dadurch gekennzeichnet, dass** die Abflussrohrleitung (20) als Wellenrohrleitung (20) ausgebildet ist.

9. Geschirrspülmaschine nach einem der vorstehenden Ansprüche, **dadurch gekennzeichnet, dass** der Abstand zwischen benachbarten Wellenbergen der Wellenrohrleitung (20) 2 - 5 mm und/oder dass die Wandstärke der Wellenrohrleitung (20) weniger als 1 mm beträgt.

10. Geschirrspülmaschine nach einem der vorstehenden Ansprüche, **dadurch gekennzeichnet, dass** die Abflussrohrleitung (20) als Rohrschlange mäandernd durch den Wasserbehälter (12) geführt ist.

11. Geschirrspülmaschine nach einem der vorstehenden Ansprüche, **dadurch gekennzeichnet, dass** der Spülbehälter (2) wärmeleitend mit dem Wasserbehälter (12) verbunden ist.

12. Geschirrspülmaschine nach einem der vorstehenden Ansprüche, **dadurch gekennzeichnet, dass** die Abflussrohrleitung (20) zur einstückigen Verbindung einer Laugenpumpe (19) der Geschirrspülmaschine (1) mit einer Abwasserentsorgungseinrichtung (21) ausgebildet ist

13. Geschirrspülmaschine nach einem der vorstehenden Ansprüche, **dadurch gekennzeichnet, dass** die Abflussrohrleitung (20) eingangsseitig durch einen Boden (26) des Wasserbehälters (12) geführt ist.

14. Geschirrspülmaschine nach einem der vorstehenden Ansprüche, **dadurch gekennzeichnet, dass** die Abflussrohrleitung (20) eingangsseitig von einem unteren Teil des Wasserbehälters (12), insbesondere im Wesentlichen senkrecht, zu einem oberen Teil des Wasserbehälters (12) hochgeführt ist.

15. Verfahren zum Betreiben einer Geschirrspülmaschine (1), insbesondere nach mindestens einem der vorstehenden Ansprüche, mit einer Steuereinrichtung (8) zur Steuerung eines Spülgangs zum Reinigen von Spülgut anhand wenigstens eines in der Steuereinrichtung (8) hinterlegten Spülprogramms (SP), mit einem Spülbehälter (2) zur Aufnahme des Spülguts, mit einem Wasserbehälter (12) zum Bevorraten von Wasser, insbesondere von Frischwasser (FW), und mit einer durch die Steuereinrichtung (8) steuerbaren Laugenpumpe (19) zum Abpumpen von Abwasser (AW) aus dem Spülbehälter (2) über eine Abflussrohrleitung (20), die durch den Wasserbehälter (12) hindurchgeführt ist, **dadurch gekennzeichnet, dass** das Spülprogramm (SP) so ausgebildet ist, dass das Abwasser (AW) wenigstens einmal mittels einer Abpumpsequenz (APS) abgepumpt wird, die wenigstens eine Teilabpumpsequenz (TAS1, TAS2, TAS3) umfasst, die jeweils einen Abpumpschritt (AP1, AP2, AP3) zum Abpumpen eines Teilvolumens (TV1, TV2, TV3) des Abwassers (AW) und einen darauffolgenden Abpumppausenschritt (APP1, APP2, APP3) zum Übertragen von Wärmeenergie von dem Teilvolumen (TV1, TV2, TV3) des Abwassers (AW) auf das bevorratete Wasser aufweist.

## Claims

1. Dishwasher, in particular household dishwasher (1), having a control facility (8) for controlling a wash cycle for cleaning items to be washed by means of at least one wash programme (SP) stored in the control facility (8), having a washing container (2) for receiving the items to be washed, having a water tank (12) for storing water (W), in particular fresh water (FW), and having a wash liquor pump (19) which can be controlled by the control facility (8) for pumping off wastewater (AW) out of the washing container (2) by way of a drainage pipe (20) which is guided through the water tank (12), **characterised in that** the wash programme (SP) is embodied such that the wastewater (AW) is pumped off at least once by means of a pump-off sequence (APS), which comprises at least one partial pump-off sequence (TAS1, TAS2, TAS3), each of which has a pump-off step (AP1, AP2, AP3) for pumping off a partial volume (TV1, TV2, TV3) of the wastewater (AW) and a subsequent pump-off pause step (APP1, APP2, APP3) for transmitting thermal energy from the partial volume (TV1, TV2, TV3) of the wastewater (AW) to the stored water (W).

2. Dishwasher according to the preceding claim, **characterised in that** the wash programme (SP) is embodied so that the partial volume (TV1, TV2, TV3) of the wastewater (AW), which is pumped off during one of the partial pump-off sequences (TAS1, TAS2, TAS3), amounts to at least 70%, preferably at least 80%, particularly preferably at least 90% and/or at most 130%, preferably at most 120%, particularly preferably at most 110%, of an internal volume of a section (20b) of the drainage pipe (20) arranged in the water tank (12), wherein the internal volume is that volume which the wastewater (AW) can assume **in that** section of the drainage pipe (20) which extends from the inlet of the drainage pipe (20) into the water tank (12) as far as the outlet of the drainage pipe (20) from the water tank (12).

3. Dishwasher according to one of the preceding claims, **characterised in that** the wash programme (SP) is embodied so that the partial volume (TV1) of the wastewater (W), which is pumped off during the first partial pump-off sequence (TAS1) of the partial pump-off sequences (TAS1, TAS2, TAS3), is raised by an additional volume (ZV) compared with the partial volume (TV2, TV3) of the following partial pump-off sequences (TAS2, TAS3), which amounts to at least 70%, preferably at least 80%, particularly preferably at least 90% and/or at most 130%, preferably at most 120%, particularly preferably at most 110%, of an internal volume of a section (20a) of the drainage pipe (20) arranged between the wash liquor pump (19) and the water tank (12), wherein the internal volume is that volume which the wastewater (AW) can assume **in that** section of the drainage pipe (20) which extends from the wash liquor pump (19) as far as the inlet of the drainage pipe (20) into the water tank (12).

4. Dishwasher according to one of the preceding claims, **characterised in that** the wash liquor pump (19) is assigned a power recognition facility (27), which is connected to the control facility (8) for transmission of power measured values, wherein the control facility (8) is embodied to control the partial volume (TV1, TV2, TV3) of the wastewater (AW), which is pumped off during one of the partial pump-off sequences (TAS1, TAS2, TAS3), on the basis of the power measured values.

5. Dishwasher according to one of the preceding claims, **characterised in that** the wash programme (SP) is embodied so that a duration of in each case one of the pump-off pause steps (APP1, APP2, APP3) is controlled on the basis of a temperature of the stored water (W) and/or on the basis of a temperature of the wastewater (W) to be pumped off.

6. Dishwasher according to one of the preceding claims, **characterised in that** the wash programme (SP) is embodied so that the pump-off sequence (APS) is carried out at the end of at least one unheated water-conducting programme step (VS, ZS) and/or at the end of at least one heated water-conducting programme step (RS, KS).

7. Dishwasher according to one of the preceding claims, **characterised in that** the drainage pipe (20) is embodied as an outflow hose (20).

8. Dishwasher according to one of the preceding claims, **characterised in that** the drainage pipe (20) is embodied as a corrugated pipe (20).

9. Dishwasher according to one of the preceding claims, **characterised in that** the distance between adjacent wave peaks of the corrugated pipe (20) amounts to 2 - 5 mm and/or that the wall thickness of the corrugated pipe (20) amounts to less than 1 mm.

10. Dishwasher according to one of the preceding claims, **characterised in that** the drainage pipe (20) as a tube coil is guided in a meandering manner through the water tank (12).

11. Dishwasher according to one of the preceding claims, **characterised in that** the washing container (2) is connected in a heat-conducting manner with the water tank (12).

12. Dishwasher according to one of the preceding claims, **characterised in that** the drainage pipe (20) is embodied for connection in one piece of a wash liquor pump (19) of the dishwasher (1) with a wastewater discharge facility (21).

13. Dishwasher according to one of the preceding claims, **characterised in that** the drainage pipe (20) is guided on the input side through a base (26) of the water tank (12).

14. Dishwasher according to one of the preceding claims, **characterised in that** the drainage pipe (20) is raised on the input side from a lower part of the water tank (12), in particular essentially vertically, to an upper part of the water tank (12).

15. Method for operating a dishwasher (1), in particular according to at least one of the preceding claims, having a control facility (8) for controlling a wash cycle for cleaning items to be washed by means of at least one wash programme (SP) stored in the control facility (8), having a washing container (2) for receiving items to be washed, having a water tank (12) for storing water, in particular fresh water (FW), and having a wash liquor pump (19) which can be controlled by the control facility (8) for pumping off wastewater (AW) out of the washing container (2) by way of a drainage pipe (20), which is guided through the water tank (12), **characterised in that** the wash programme (SP) is embodied such that the wastewater (AW) is pumped off at least once by means of a pump-off sequence (APS), which comprises at least one partial pump-off sequence (TAS1, TAS2, TAS3), each of which has a pump-off step (AP1, AP2, AP3) for pumping off a partial volume (TV1, TV2, TV3) of the wastewater (AW) and a subsequent pump-off pause step (APP1, APP2, APP3) for transmitting thermal energy from the partial volume (TV1, TV2, TV3) of the wastewater (AW) to the stored water (W).

## Revendications

1. Lave-vaisselle, en particulier lave-vaisselle ménager (1), avec un dispositif de commande (8) pour la commande d'un cycle de lavage pour le lavage de vaisselle au moyen d'au moins un programme de lavage (SP) enregistré dans le dispositif de commande (8), avec une cuve de lavage (2) pour l'accueil de la vaisselle, avec un réservoir d'eau (12) pour le stockage d'eau (W), en particulier d'eau fraîche (FW), et avec une pompe à lessive (19) commandable par le dispositif de commande (8) pour le pompage de l'eau usée (AW) en dehors de la cuve de lavage (2) via un tuyau de décharge (20) traversant le réservoir d'eau (12), **caractérisé en ce que** le programme de lavage (SP) est exécuté de telle sorte que l'eau usée (AW) est pompée au moins une fois au moyen d'une séquence de pompage (APS) comprenant au moins une séquence de pompage partiel (TAS1, TAS2, TAS3), qui présente respectivement une étape de pompage (AP1, AP2, AP3) pour le pompage d'un volume partiel (TV1, TV2, TV3) de l'eau usée (AW) et une étape de pause du pompage subséquente (APP1, APP2, APP3) pour la transmission d'énergie calorifique du volume partiel (TV1, TV2, TV3) de l'eau usée (AW) à l'eau (W) stockée.

2. Lave-vaisselle selon la revendication précédente, **caractérisé en ce que** le programme de lavage (SP) est exécuté de telle sorte que le volume partiel (TV1, TV2, TV3) de l'eau usée (AW), pompé durant une des séquences de pompage partiel (TAS1, TAS2, TAS3) correspond à au moins 70 %, de façon préférée à au moins 80 %, de façon particulièrement préférée à au moins 90 %, et/ou au maximum à 130 %, de préférence au maximum à 120 %, de façon particulièrement préférée au maximum à 110 %, d'un volume intérieur d'une section (20b) du tuyau de décharge (20) disposé dans le réservoir d'eau (12), le volume intérieur étant le volume que l'eau usée (AW) peut occuper dans la section du tuyau de décharge (20) s'étendant de l'entrée du tuyau de décharge (20) dans le réservoir d'eau (12) jusqu'à la sortie du tuyau de décharge (20) au départ du réservoir d'eau (12).

3. Lave-vaisselle selon l'une des revendications précédentes, **caractérisé en ce que** le programme de lavage (SP) est exécuté de telle sorte que le volume partiel (TV1) de l'eau usée (AW) pompé durant la première séquence de pompage partiel (TAS1) des séquences de pompage partiel (TAS1, TAS2, TAS3) est, par rapport au volume partiel (TV2, TV3) des séquences de pompage partiel suivantes (TAS2, TAS3), accru d'un volume supplémentaire (ZV) correspondant à au moins 70 %, de préférence à au moins 80 %, de façon particulièrement préférée à au moins 90 %, et/ou au maximum à 130 %, de préférence au maximum à 120 %, de façon particulièrement préférée au maximum à 110 %, d'un volume intérieur d'une section (20a) du tuyau de décharge (20) disposée entre la pompe à lessive (19) et le réservoir d'eau (12), le volume intérieur étant le volume que l'eau usée (AW) peut occuper dans la section du tuyau de décharge (20) s'étendant de la pompe à lessive (19) jusqu'à l'entrée du tuyau de décharge (20) dans le réservoir d'eau (12).

4. Lave-vaisselle selon l'une des revendications précédentes, **caractérisé en ce qu'**un dispositif de détection de puissance (27) est affecté à la pompe à lessive (19), lequel est relié au dispositif de commande (8) pour la transmission de valeurs de mesure de puissance, dans lequel le dispositif de commande (8) est exécuté pour le pilotage du volume partiel (TV1, TV2, TV3) de l'eau usée (AW) pompé durant une des séquences de pompage partiel (TAS1, TAS2, TAS3), au moyen des valeurs de mesure de puissance.

5. Lave-vaisselle selon l'une des revendications précédentes, **caractérisé en ce que** le programme de lavage (SP) est exécuté de telle sorte qu'une durée d'une étape de pause du pompage respective (APP1, APP2, APP3) est pilotée au moyen d'une température de l'eau stockée (W) et/ou au moyen d'une température de l'eau usée à pomper (AW).

6. Lave-vaisselle selon l'une des revendications précédentes, **caractérisé en ce que** le programme de lavage (SP) est exécuté de telle sorte que la séquence de pompage (APS) est exécutée à la fin d'au moins une étape de programme à circulation d'eau non chauffée (VS, ZS) et/ou à la fin d'au moins une étape de programme à circulation d'eau chauffée (RS, KS).

7. Lave-vaisselle selon l'une des revendications précédentes, **caractérisé en ce que** le tuyau de décharge (20) est exécuté sous la forme d'un flexible de décharge (20).

8. Lave-vaisselle selon l'une des revendications précédentes, **caractérisé en ce que** le tuyau de décharge (20) est exécuté sous la forme d'un tuyau de décharge annelé (20).

9. Lave-vaisselle selon l'une des revendications précédentes, **caractérisé en ce que** l'écartement entre des crêtes voisines du tuyau de décharge annelé (20) est de 2 à 5 mm et/ou **en ce que** l'épaisseur de paroi du tuyau de décharge annelé (20) est inférieure à 1 mm.

10. Lave-vaisselle selon l'une des revendications précédentes, **caractérisé en ce que** le tuyau de décharge (20) est mené sous la forme d'un serpentin en méandres à travers le réservoir d'eau (12).

11. Lave-vaisselle selon l'une des revendications précédentes, **caractérisé en ce que** la cuve de lavage (2) est reliée de façon thermoconductrice au réservoir d'eau (12).

12. Lave-vaisselle selon l'une des revendications précédentes, **caractérisé en ce que** le tuyau de décharge (20) est exécuté pour la liaison en une seule pièce d'une pompe à lessive (19) du lave-vaisselle (1) à un dispositif d'élimination de l'eau usée (21).

13. Lave-vaisselle selon l'une des revendications précédentes, **caractérisé en ce que** le tuyau de décharge (20) est mené côté entrée à travers un fond (26) du réservoir d'eau (12).

14. Lave-vaisselle selon l'une des revendications précédentes, **caractérisé en ce que** le tuyau de décharge (20) est mené vers le haut côté entrée, d'une partie inférieure du réservoir d'eau (12), en particulier essentiellement à la verticale, en direction d'une partie supérieure du réservoir d'eau (12).

15. Procédé d'exploitation d'un lave-vaisselle (1), en particulier selon au moins une des revendications précédentes, avec un dispositif de commande (8) pour la commande d'un cycle de lavage pour le lavage de vaisselle au moyen d'au moins un programme de lavage (SP) enregistré dans le dispositif de commande (8), avec une cuve de lavage (2) pour l'accueil de la vaisselle, avec un réservoir d'eau (12) pour le stockage d'eau, en particulier d'eau fraîche (FW), et avec une pompe à lessive (19) commandable par le dispositif de commande (8) pour le pompage de l'eau usée (AW) en dehors de la cuve de lavage (2) via un tuyau de décharge (20) traversant le réservoir d'eau (12), **caractérisé en ce que** le programme de lavage (SP) est exécuté de telle sorte que l'eau usée (AW) est pompée au moins une fois au moyen d'une séquence de pompage (APS) comprenant au moins une séquence de pompage partiel (TAS1, TAS2, TAS3), qui présente respectivement une étape de pompage (AP1, AP2, AP3) pour le pompage d'un volume partiel (TV1, TV2, TV3) de l'eau usée (AW) et une étape de pause du pompage subséquente (APP1, APP2, APP3) pour la transmission d'énergie calorifique du volume partiel (TV1, TV2, TV3) de l'eau usée (AW) à l'eau stockée.
